(19) Europäisches Patentamt
European Patent Office
Office européen des brevets

(11) **EP 4 312 283 B1**

(12) **EUROPEAN PATENT SPECIFICATION**

(45) Date of publication and mention
of the grant of the patent:
**31.12.2025 Bulletin 2026/01**

(21) Application number: **23186637.7**

(22) Date of filing: **20.07.2023**

(51) International Patent Classification (IPC):
*H01M 4/04* (2006.01)     *H01M 4/131* (2010.01)
*H01M 4/525* (2010.01)    *H01M 4/62* (2006.01)
*H01M 4/66* (2006.01)     *H01M 10/0525* (2010.01)
*H01M 10/0585* (2010.01)   *H01M 4/02* (2006.01)

(52) Cooperative Patent Classification (CPC):
**H01M 10/0585; H01M 4/0404; H01M 4/131;
H01M 4/525; H01M 4/623; H01M 4/625;
H01M 4/661; H01M 10/0525;** H01M 4/0409;
H01M 2004/021; Y02E 60/10; Y02P 70/50

(54) **LITHIUM BATTERY AND PREPARATION METHOD THEREOF**

LITHIUMBATTERIE UND HERSTELLUNGSVERFAHREN DAFÜR

BATTERIE AU LITHIUM ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.07.2022 KR 20220091150**

(43) Date of publication of application:
**31.01.2024 Bulletin 2024/05**

(73) Proprietor: **Samsung SDI Co., Ltd.**
**Yongin-si, Gyeonggi-do 17084 (KR)**

(72) Inventors:
• **Lee, Jinhyon**
**17084 Yongin-si, Gyeonggi-do (KR)**
• **Kwon, Ilkyong**
**17084 Yongin-si, Gyeonggi-do (KR)**
• **Nam, Hyun**
**17084 Yongin-si, Gyeonggi-do (KR)**
• **Lee, Donggeun**
**17084 Yongin-si, Gyeonggi-do (KR)**
• **Pyun, Ahram**
**17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**EP-B1- 3 754 773    US-A1- 2022 209 220**

**Description**

**BACKGROUND**

**1. Field**

Embodiments of the present disclosure relate to a lithium battery and a preparation method thereof.

**2. Description of the Related Art**

In accordance with the emergence of various miniaturized, high performance electronic devices in the field of lithium batteries, high energy density is becoming more important, in addition to miniaturization and weight reduction. That is, high-capacity lithium batteries are becoming desired and/or important.

A stack of electrodes having a high load is used to embody a lithium battery suitable for the above uses.

In a preparation process of the stack, the electrode arranged in the outermost layer of the electrode group stack is prone to generating defects. Accordingly, defects may occur in a lithium battery including such a stack.

For example, US 2022/209220 A1 discloses an electrode, a lithium battery comprising the same, and a method of manufacturing the electrode are provided. The electrode includes: an electrode active material layer including an electrode active material and a binder; an electrode current collector disposed on one surface or between opposite surfaces of the electrode active material layer; and an interlayer disposed between the electrode active material layer and the electrode current collector. EP 3 754 773 A1 relates to a secondary battery comprising an electrode assembly comprising a plurality of radical units in which a first electrode and a second electrode are alternately laminated with a separator therebetween and a separation film surrounding the plurality of radical units to be repeatedly laminated, wherein the electrode assembly comprises a protection unit laminated on an outermost separation film disposed on the uppermost end or lowermost end of the separation film, the protection unit has a structure a second protection electrode, a separator, a first protection electrode are successively laminated from the outermost separation film disposed on the uppermost end or lowermost end of the electrode assembly, the second protection electrode has a cross-sectional coating structure comprising a second collector and a second electrode active material portion coated with a second electrode active material on an inner surface of the second collector, and the inner surface is a surface facing a center of the electrode assembly.

Therefore, a lithium battery in which generation of defects is suppressed or reduced in the manufacturing process of such a stack is desired (or required).

**SUMMARY**

The invention is defined in the appended claims. Aspects of one or more embodiments of the present disclosure are directed towards providing a lithium battery in which the generation of defects is suppressed or reduced during a preparation process of an electrode group stack and providing a lithium battery having enhanced energy density.

Aspects of one or more embodiments of the present disclosure are directed towards providing a preparation method of the lithium battery.

Additional aspects will be set forth in part in the description which follows and, in part, will be apparent from the description, or may be learned by practice of the presented embodiments of the disclosure.

According to the present invention, a lithium battery includes: an electrode group stack including a plurality of positive electrodes and one or more negative electrodes that are alternately stacked in a thickness direction (of the stack), wherein the plurality of positive electrodes includes a first positive electrode and a second positive electrode, the first positive electrode being an inner layer of the electrode group stack, the second positive electrode being an outermost layer of the electrode group stack, and the first positive electrode including a first positive current collector, and a first positive active material layer, wherein the first positive active material layer is on both surfaces (e.g., opposite surfaces or sides) of the first positive current collector, wherein the second positive electrode includes a second positive current collector, a second positive active material layer, and an interlayer between the second positive current collector and the second positive active material layer, the second positive current collector including a first surface and a second surface on opposite sides of the second positive current collector, wherein the first surface faces the inner layer, wherein the second positive active material layer is on the first surface, and not on the second surface, and a thickness of the second positive current collector is less than or equal to a thickness of the first positive current collector. The second positive active material layer comprises a second positive active material and a binder, the second positive active material is a dry positive active material, the binder is a dry binder and the dry binder comprises a fibrillized binder, and the dry binder comprises a fluorine-based binder, a thickness of the second positive active material layer arranged on the second positive current collector is greater than the thickness of the first positive active material layer arranged on the first positive current collector and a ratio of the thickness of the first positive active material layer (100) to the thickness of the second positive active material layer is 1: 1.1 to 1: 3

According to one or more embodiments of the present disclosure a lithium battery includes: an electrode group stack including a plurality of negative electrodes and one or more positive electrodes that are alternately stacked in a thickness direction, wherein the plurality of negative electrodes includes a first negative electrode and a second negative electrode, the first negative electrode being an inner layer of the electrode group stack, the second negative electrode being an outermost layer of the electrode group stack, and the first negative electrode including a first negative current collector and a first negative active material layer, wherein the first negative active material layer is on both surfaces of the first negative current collector, wherein the second negative electrode includes a second negative current collector, a second negative active material layer, and an interlayer between the second negative current collector and the second negative active material layer, the second negative current collector including a first surface and a second surface on opposite sides of the second negative current collector, wherein the first surface faces the inner layer, wherein the second negative active material layer is on the first surface, and not on the second surface, and a thickness of the second negative current collector is less than or equal to a thickness of the first negative current collector.

According to the present invention a preparation method of the lithium battery according to the present invention includes: preparing a dry mixture by dry mixing a second positive active material, a dry conductive material, and a dry binder; providing a second positive current collector; arranging an interlayer on a first surface of the second positive current collector; and preparing a second positive electrode having a second positive active material layer on the first surface of the second positive current collector by placing and roll-pressing the dry mixture on the interlayer, preparing an electrode group stack including a plurality of positive electrodes and one or more negative electrodes that are alternately stacked in a thickness direction, wherein the plurality of positive electrodes includes a first positive electrode and the second positive electrode, the first positive electrode being an inner layer of the electrode group stack, the second positive electrode being an outermost layer of the electrode group stack, and the first positive electrode including a first positive current collector and a first positive active material layer, wherein the first positive active material layer is on both surfaces of the first positive current collector, wherein the second positive electrode includes the second positive current collector, the second positive active material layer, and the interlayer between the second positive current collector and the second positive active material layer, the second positive current collector including a first surface and a second surface on opposite sides of the second positive current collector, wherein the first surface faces the inner layer, and wherein the second positive active material layer is on the first surface, and not on the second surface, and a thickness of the second positive current collector is less than or equal to a thickness of the first positive current collector. A first dry mixture is prepared by primarily dry mixing a second positive active material, a dry conductive material, and a dry binder and a second mixture is prepared by secondarily dry mixing the electrode active material, the dry conductive material, and the dry binder.

## BRIEF DESCRIPTION OF DRAWINGS

The above and other aspects, features, and/or principles of certain embodiments of the disclosure will be more apparent from the following description taken in conjunction with the accompanying drawings, in which:

FIG. 1 shows a schematic diagram of an electrode assembly according to one or more embodiments of the present disclosure;
FIG. 2 shows an image of a second positive electrode prepared in Example 1;
FIG. 3 shows a image of a second positive electrode prepared in Comparative Example 1; and
FIG. 4 shows a schematic, perspective diagram of a lithium battery according to one or more embodiments of the present disclosure;

## Reference Numerals

| | | | |
|---|---|---|---|
| 1 | Lithium battery; | 2 | Negative electrode; |
| 3 | Positive electrode; | 4 | Separator; |
| 5 | Battery case; | 6 | Cap assembly; |
| 7 | Battery structure; | 8 | Electrode tab; |
| 10000 | Lithium battery; | 100 | First positive active material layer; |
| 101 | Second positive active material layer; | 200 | First positive current collector; |
| 201 | Second positive current collector; | 301 | Interlayer; |
| 400 | First positive electrode; | 401 | Second positive electrode; |

(continued)

| 500 | Negative active material layer; | 600 | Negative current collector; |
| 700 | Negative electrode; | 1000 | Electrode group stack |

## DETAILED DESCRIPTION

The present disclosure may be modified in many alternate forms, and thus specific embodiments will be exemplified in the drawing and described in more detail.

Embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Unless otherwise noted, like reference numerals denote like elements throughout the attached drawings and the written description, and thus, duplicative descriptions thereof may not be provided.

As used herein, the term "and/or" includes any and all combinations of one or more of the associated listed items. Expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

The present disclosure described hereinafter may be modified in one or more suitable ways, and may have many examples, and thus, certain examples are illustrated in the drawings, and are described in more detail in the specification. However, this does not intend to limit the present disclosure within particular embodiments, and it should be understood that the present disclosure includes all the modifications, equivalents, and replacements within the idea and technical scope of the present disclosure.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes," "including," "have" and "having" when used in this specification, specify the presence of the stated features, integers, steps, operations, elements, and/or components, but do not preclude the presence or addition of one or more other features, integers, steps, operations, elements, components, and/or groups thereof.

As used herein, "/" may be interpreted as "and" or "or" depending on the context.

In the drawings, a thickness may be enlarged or reduced to clearly represent various layers and regions, i.e., the relative sizes of elements, layers, and regions may be exaggerated for clarity. The same reference numerals were attached to similar portions throughout the disclosure.

It will be understood that when an element or layer is referred to as being "on," "connected to," or "above" another element or layer, it can be directly on, connected to, or above the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "below," "lower," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

The term "dry", used herein, means a state that does not intentionally contact a solvent such as a process solvent, or a state that does not intentionally include a solvent. For example, a dry electrode active material means an electrode active material that has not intentionally contacted a solvent, or an electrode active material that does not intentionally include a solvent. For example, a dry conductive material means a conductive material that has not intentionally contacted a solvent, or a conductive material that does not intentionally include a solvent. For example, a dry binder means a binder that has not intentionally contacted a solvent, or a binder that does not intentionally include a solvent. For example, a binder in a liquid state at room temperature without being mixed with a solvent is a dry binder.

Hereinafter, an electrode according to example embodiments, a lithium battery including the same, and a manufacturing method thereof will be described in more detail.

A lithium battery according to one or more embodiments includes an electrode group stack in which a plurality of positive electrodes and one or more negative electrodes are alternately stacked in a thickness direction, wherein the plurality of positive electrodes includes a first positive electrode and a second positive electrode, the first positive electrode is an inner layer of the electrode group stack, the second positive electrode is the outermost layer of the electrode group stack, the first positive electrode includes a first positive current collector, and a first positive active material layer, wherein the first positive active material layer is arranged on both surfaces of the first positive current collector, the second positive electrode includes a second positive current collector, a second positive active material layer, and an interlayer arranged between the second positive current collector and the second positive active material layer, the second positive current collector includes a first surface and a second surface, wherein the first surface faces the inner layer, and the second surface is an opposite surface of the first surface, the second positive active material layer is arranged on the first surface, and not arranged on the second surface, and a thickness of the second positive current collector is equal to or smaller than a thickness of the first positive current collector.

In the lithium battery of one or more embodiments of the present disclosure, the second positive electrode arranged on the outermost layer of the electrode group stack includes an interlayer between the second positive current collector and the second positive active material layer, thereby suppressing bending of the second positive electrode. Accordingly, an occurrence of defects such as curling and bending of the second positive electrode during the manufacturing process of the electrode group stack is suppressed or reduced. In one or more embodiments, because the second positive electrode is a single-sided electrode, energy density of the lithium battery including the electrode group stack is improved. In one or more embodiments, as a thickness of the second positive current collector arranged on the second positive electrode is equal to a thickness of the first positive current collector arranged in the first positive electrode, or as the thickness of the second positive current collector arranged in the second positive electrode is smaller than the thickness of the first positive current collector arranged in the first positive electrode, energy density of the lithium battery is improved. In one or more embodiments, the occurrence of defects in the manufacturing process of the electrode group stack is further suppressed or reduced. Because the interlayer provides a binding force between the second positive current collector and the second positive active material layer, a pressure required for binding the second positive current collector and the second positive active material layer is reduced when the second positive electrode is prepared. Accordingly, bending of the second positive electrode is suppressed or reduced.

On the other hand, when a single-sided electrode is arranged on the outermost layer of the electrode group stack in the lithium battery in the related art, the single-sided electrode is easily bent into a cylindrical shape due to roll-pressing during the manufacturing process of the single-sided electrode. Therefore, it is difficult to match the position of the single-sided electrode arranged at the upper end or the lower end of the electrode group stack to the electrode group stack, and defects such as curling and bending are likely to occur in the single-sided electrode during the manufacturing process. In one or more embodiments, when a double-sided electrode is arranged on the outermost layer of the electrode group stack, it is inefficient because only one surface of the electrode facing the exterior body of the positive electrode participates in the electrode reaction and the other surface does not participate in the electrode reaction. In one or more embodiments, energy density of a lithium battery including such an electrode group stack is lowered.

In a lithium battery of one or more embodiments of the present disclosure, a ratio of a thickness of the first positive current collector to a thickness of the second positive current collector is, for example, 1: 0.2 to 1:1, 1:0.3 to 1:1, 1:0.4 to 1: 1, 1:0.5 to 1:1, 1:0.6 to 1:1, 1:0.7 to 1:1, 1:0.8 to 1:1, or 1:0.9 to 1:1. When the ratio of the thickness of the first positive current collector to the thickness of the second positive current collector is in this range, energy density of the lithium battery may be further improved.

The thickness of the second positive current collector may be, for example, less than 15 $\mu$m, 14.5 $\mu$m or less, 14 $\mu$m or less, 13 $\mu$m or less, or 12 $\mu$m or less. The thickness of the second positive current collector may be, for example, 0.1 $\mu$m to less than 15 $\mu$m, 1 $\mu$m to 14.5 $\mu$m, 2 $\mu$m to 14 $\mu$m, 3 $\mu$m to 14 $\mu$m, 5 $\mu$m to 14 $\mu$m, 7 $\mu$m to 13 $\mu$m, or 10 $\mu$m to 12 $\mu$m. The thickness of the first positive current collector may be, for example, 15 $\mu$m or more, 20 $\mu$m or more, or 30 $\mu$m or more. The thickness of the first positive current collector may be, for example, 15 $\mu$m to 100 $\mu$m, 15 $\mu$m to 50 $\mu$m, 15 $\mu$m to 30 $\mu$m, or 15 $\mu$m to 20 $\mu$m.

The second positive current collector may have a reduced surface roughness compared to the first positive current collector included in the first positive electrode. As the surface of the second positive current collector has a reduced surface roughness, the second positive current collector may form a substantially uniform interface with the second positive active material layer and/or the interlayer. As a result, a local side reaction and/or a non-substantially uniform electrode reaction at the interface between the second positive current collector and another layer is suppressed or reduced, and cycle characteristics of a lithium battery including such an electrode may be improved.

A maximum roughness depth ($R_{max}$) of the surface of the first positive current collector may be, for example, greater than a maximum roughness of the surface of the second positive current collector. For example, the maximum roughness $R_{max}$ of the surface of the second positive current collector may be, for example, smaller than the maximum roughness of the surface of the first positive current collector. Mean roughness ($R_a$) of the surface of the first positive current collector may be, for example, greater than a mean roughness of the surface of the second positive current collector. For example, the mean roughness $R_a$ of the surface of the second positive current collector may be, for example, smaller than the mean roughness of the surface of the first positive current collector. Root mean square (RMS) roughness ($R_q$) of the surface of the first positive current collector may be, for example, greater than a root mean square roughness of the surface of the second positive current collector. For example, the root mean square roughness ($R_q$) of the surface of the second positive current collector may be, for example, smaller than the root mean square roughness of the surface of the first positive current collector.

The maximum roughness depth ($R_{max}$) of the surface of the second positive current collector may be, for example, 3 $\mu$m or less, 2 $\mu$m or less, 1 $\mu$m or less, 0.5 $\mu$m or less, or 0.1 $\mu$m or less. The maximum roughness depth ($R_{max}$) of the surface of the second positive current collector may be, for example, 10 nm to 3 $\mu$m, 10 nm to 2 $\mu$m, 10 nm to 1 $\mu$m, 10 nm to 0.5 $\mu$m, or 10 nm to 0.1 $\mu$m.

The mean roughness ($R_a$) of the surface of the second positive current collector may be, for example, 2 $\mu$m or less, 1 $\mu$m or less, 0.5 $\mu$m or less, or 0.1 $\mu$m or less. The mean roughness ($R_a$) of the surface of the second positive current collector may be, for example, 10 nm to 2 $\mu$m, 10 nm to 1 $\mu$m, 10 nm to 0.5 $\mu$m, or 10 nm to 0.1 $\mu$m.

The root mean square (RMS) roughness ($R_q$) of the surface of the second positive current collector may be, for example, 2 $\mu$m or less, 1 $\mu$m or less, 0.5 $\mu$m or less, or 0.1 $\mu$m or less. The root mean square roughness ($R_q$) of the surface of the second positive current collector may be, for example, 10 nm to 2 $\mu$m, 10 nm to 1 $\mu$m, 10 nm to 0.5 $\mu$m, or 10 nm to 0.1 $\mu$m.

A material constituting the second positive current collector may be any material that does not react with lithium, that is, a material that does not form an alloy or a compound with lithium, and has conductivity (e.g., is a conductor). The second positive current collector may be, for example, a metal or an alloy. The second positive current collector may include (e.g., consist of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The second positive current collector may have a form of (e.g., may have a form selected from), for example, a sheet, a foil, a film, a plate, a porous body, a mesoporous body, a through-hole containing body, a polygonal ring body, a mesh body, a foam, and/or a nonwoven body, but the present disclosure is not necessarily limited to this form, and any form utilized in the art is possible and may be utilized.

The interlayer may include, for example, a binder. As the interlayer includes the binder, the binding force between the second positive current collector and the second positive active material layer may be further improved. The binder included in the interlayer is, for example, a conductive binder or a non-conductive binder. The conductive binder may be, for example, an ion conductive binder, and/or an electron conductive binder. A binder having both (e.g., simultaneously) ionic conductivity and electronic conductivity may be both (e.g., simultaneously) an ion conductive binder and an electron conductive binder. The ion conductive binder is, for example, polystyrene sulfonate (PSS), polyvinylidene fluoride-hexafluoropropylene copolymer (PVDF-HFP), polyvinyl fluoride (PVF), poly vinylidene fluoride (PVDF), polymethyl methacrylate (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, and/or polyacetylene. The ion conductive binder may include a polar functional group. The ion conductive binder including a polar functional group is, for example, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), Poly(styrene sulfonate) (PSS), lithium 9,10-diphenylanthracene-2-sulfonate (DPASLi+), and/or the like. The electron conductive binder is, for example, polyacetylene, polythiophene, polypyrrole, poly(p-phenylene), poly(phenylenevinylene), poly(phenylenesulfide), polyaniline, and/or the like. The interlayer may be, for example, a conductive layer including a conductive polymer. The binder included in the interlayer may be (e.g., may be selected from), for example, binders included in the electrode active material layer. The interlayer may include, for example, the same binder as the electrode active material layer. The binder included in the interlayer is, for example, a fluorine-based binder. The fluorine-based binder included in the interlayer is, for example, polyvinylidene fluoride (PVDF). The interlayer may be arranged on the electrode current collector, for example, by a dry or wet method. The interlayer may be, for example, a binding layer including a binder.

The interlayer may include, for example, a carbon-based conductive material. The carbon-based conductive material included in the interlayer may include (e.g., may be selected from) carbon-based conductive materials included in the electrode active material layer. The interlayer may include the same carbon-based conductive material as the electrode active material layer. As the interlayer includes a carbon-based conductive material, the interlayer may be, for example, a conductive layer. The interlayer may be, for example, a conductive binding layer including a binder and a carbon-based conductive material.

The interlayer may be arranged on the second positive current collector by a dry method by deposition, such as by chemical vapor deposition (CVD), or physical vapor deposition (PVD). The interlayer may be arranged on the second positive current collector by, for example, depositing a carbon-based conductive material on the second positive current collector. The interlayer prepared by a dry method may include (e.g., consist of) a carbon-based conductive material and may not include (e.g., may exclude) a binder. The interlayer may be arranged on the second positive current collector by a wet method, for example, by spin coating, dip coating, and/or the like. The interlayer may be arranged on the second positive current collector by, for example, coating a composition including a carbon-based conductive material, a binder, and a solvent on the second positive current collector and drying the composition. The interlayer may include a binder and may not include (e.g., may exclude) a carbon-based conductive material. The interlayer may be arranged on the second positive current collector by, for example, coating a composition including a binder and a solvent on the second positive current collector and drying. Because the interlayer has a small thickness, even when the interlayer not containing a carbon-based conductive material is arranged between the second positive current collector and the second positive active material layer, the reversibility of the electrode reaction in the second positive electrode may not substantially change. The interlayer may have a single-layer structure or a multi-layer structure including a plurality of layers.

An interlayer may be arranged on one or both (e.g., simultaneously) surfaces of the second positive current collector. The interlayer may be, for example, arranged directly on one or both surfaces of the second positive current collector. Accordingly, another layer may not be arranged between the second positive current collector and the interlayer. As the interlayer is arranged directly on one or both surfaces of the second positive current collector, the binding force between the second positive current collector and the second positive active material layer may be further improved. A thickness of the interlayer may be, for example, 0.01 % to 30 % of the thickness of the second positive current collector. The thickness of the interlayer may be, for example, 0.01 % to 30 %, 0.1 to 30 %, 0.5 % to 30 %, 1 % to 30 %, 0.5 % to 25 %, 0.5 % to 20 %, 0.5 % to 15 %, 0.5 % to 10 %, 0.5 % to 5 %, or 0.5 % to 3 % of the thickness of the second positive current collector. The thickness of the interlayer is, for example, 10 nm to 5 $\mu$m, 50 nm to 5 $\mu$m, 200 nm to 4 $\mu$m, 500 nm to 3 $\mu$m, 500 nm to 2 $\mu$m, 500 nm to 1.5 $\mu$m, or 700 nm to 1.3 $\mu$m. As the interlayer has a thickness in this range, the binding force between the second positive current collector and the second positive active material layer is further improved, and an increase in interfacial resistance may be suppressed or reduced.

The second positive active material layer may include, for example, a second positive active material and a binder.

The second positive active material included in the second positive active material layer is, for example, a dry positive active material. The dry positive active material is, for example, a positive active material that is not impregnated, dissolved, or dispersed in a process solvent. The dry positive active material is, for example, a positive active material that does not include a process solvent or does not come into contact with a process solvent. The binder included in the second positive active material layer is, for example, a dry binder. The dry binder is, for example, a binder that is not impregnated, dissolved, or dispersed in a process solvent. The dry binder is, for example, a binder that does not include a process solvent or does not come into contact with a process solvent. The process solvent is a solvent utilized in the manufacturing process of the second positive electrode.

The dry binder is, for example, a fibrillized binder. The fibrillized binder may serve as a matrix for supporting and binding the second positive active material and other components included in the second positive active material layer. The fibrillized binder may be confirmed to have a fibrous form, for example, with a scanning electron microscope image of the electrode cross-section. The fibrillized binder has an aspect ratio of, for example, 10 or more, 20 or more, 50 or more, or 100 or more. The dry binder is, for example, polytetrafluoroethylene (PTFE), polyvinylidene fluoride-hexapropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, a copolymer thereof, and/or the like, but the present disclosure is not necessarily limited thereto, and any binder utilized in manufacturing a dry electrode may be utilized. The dry binder may include a fluorine-based binder. The fluorine-based binder is, for example, polytetrafluoroethylene (PTFE), polyvinylidenefluoride-hexapropylene (PVDF-HFP) copolymer, or polyvinylidene fluoride (PVDF). A content (e.g., amount) of the dry binder included in the second positive active material layer is, for example, 1 wt% to 10 wt%, or 1 wt% to 5 wt%, with respect to the total weight of the second positive active material layer. As the second positive active material layer includes the dry binder in this range, the binding force of the second positive electrode may be improved, and the second positive electrode may maintain a high energy density.

The second positive active material layer further includes, for example, a conductive material. The conductive material is, for example, a dry conductive material. The dry conductive material is, for example, a conductive material that is not impregnated, dissolved, or dispersed in a solvent. The dry conductive material is, for example, a conductive material that does not include a process solvent or does not come into contact with a process solvent. The dry conductive material is, for example, a carbon-based conductive material, a metal-based conductive material, or a combination thereof. The dry conductive material includes, for example, a carbon-based conductive material. The carbon-based conductive material includes, for example, a particulate conductive material. The particulate conductive material is, for example, carbon black, graphite fine particles, natural graphite, artificial graphite, acetylene black, Ketjen black, etc., but the present disclosure is not limited thereto, and any carbon-based particulate conductive material utilized in the art may be utilized. The carbon-based conductive material includes, for example, a fibrous conductive material. The fibrous conductive material is, for example, carbon nanotubes, carbon fibers, etc., but the present disclosure is not limited thereto, and any fibrous conductive material utilized in the art may be utilized. A content (e.g., amount) of the dry conductive material included in the second positive active material layer is, for example, 1 wt% to 10 wt%, or 1 wt% to 5 wt%, with respect to the total weight of the second positive active material layer. As the second positive active material layer includes the dry conductive material in this range, the conductivity of the second positive electrode may be improved, and the second positive electrode may maintain a high energy density.

The second positive active material layer is, for example, a self-standing film. The second positive active material layer may maintain a film shape without, for example, a support. Accordingly, the second positive active material layer may be prepared as a separate self-standing film, and then arranged on the second positive current collector. Because the second positive active material layer is prepared by a dry method, it does not include a process solvent that was intentionally added. For example, it may include a residual processing solvent. A trace amount of an unintended solvent may remain in the second positive active material layer, but the residual solvent is not a process solvent intentionally added. Accordingly, the second positive active material layer is distinguished from the wet positive active material layer prepared by mixing the components and the process solvent and then removing some or all of the process solvent by drying.

A thickness of the second positive active material layer is greater than a thickness of the first positive active material layer. The thickness of the second positive active material layer arranged on the second positive current collector is greater than the thickness of the first positive active material layer arranged on the first positive current collector. As the second positive active material layer has a thickness greater than that of the first positive active material layer, generation of defects in the second positive electrode during the manufacturing process of the electrode group stack may be suppressed or reduced. A ratio of the thickness of the first positive active material layer to the thickness of the second positive active material layer is 1:1.1 to 1:3, 1:1.1 to 1:2.5, 1:1.1 to 1:2, 1:1.1 to 1 :1.5, 1:1 to 1.1:1.3, 1:1.1 to 1:1.2. When the ratio of the thickness of the first positive active material layer to the thickness of the second positive active material layer is within such ranges, it is possible to effectively suppress or reduce generation of defects in the manufacturing process of the electrode assembly and the lithium battery including the same.

A mixture density of the second positive active material layer may be, for example, the same as or lower than a mixture density of the first positive active material layer. The mixture density of the second positive active material layer arranged on the second positive current collector may be equal to the mixture density of the first positive active material layer arranged on the first positive current collector, or the mixture density of the second positive active material layer arranged on the second positive current collector may be lower than the mixture density of the first positive active material layer arranged on the first positive current collector. As the second positive active material layer has a mixture density equal to or less than that of the first positive active material layer, generation of defects in the second positive electrode during the manufacturing process of the electrode group stack may be suppressed or reduced. A ratio of the mixture density of the first positive active material layer to the mixture density of the second positive active material layer is, for example, 1: 0.5 to 1:1, 1:0.6 to 1:1, 1:0.7 to 1:1, 1:0.8 to 1:1, or 1:0.9 to 1:1. When the ratio of the mixture density of the first positive active material layer and the mixture density of the second positive active material layer has these ranges, it is possible to effectively suppress or reduce the generation of defects in the manufacturing process of the electrode assembly and the lithium battery including the same.

The mixture density of the second positive active material layer may be, for example, 1 g/cm$^3$ to 5 g/cm$^3$, 2 g/cm$^3$ to 5 g/cm$^3$, 3 g/cm$^3$ to 5 g/cm$^3$, or 3 g/cm$^3$ to 4 g/cm$^3$ The mixture density of the second positive active material layer may be derived by measuring the volume and weight of the second positive active material layer included in the prepared second positive electrode. When the second positive active material layer has a mixture density within these ranges, the lithium battery including the second positive electrode may provide improved energy density.

In the second positive active material layer, when measured by utilizing the surface and interfacial cutting analysis system (SAICAS), a rate of change of vertical relative force ($F_{VR}$) according to a depth, from a first point to a second point may be, for example, 300 % or less, wherein the first point is separated 5 % from the surface of the second positive active material layer in the direction of the second positive current collector, and the second point is separated 5 % from the surface of the second positive current collector, with respect to the total thickness of the second positive active material layer. The vertical relative force (FVR) refers to vertical relative binding force. The rate of change of the vertical relative force is, for example, 10 % to 300 %, 10 % to 250 %, 10 % to 200 %, 10 % to 150 %, or 10 % to 100 %. The second point 5 % separated from the surface of the second positive current collector in the direction of the second positive active material layer corresponds to, for example, a point 95 %, with respect to the entire thickness of the second positive active material layer, separated from the surface of the second positive active material layer in the direction of the second positive current collector. The vertical relative force is calculated by Equation 1. For a measurement method utilizing SAICAS, refer to Evaluation Example 1, for example.

$$\text{Rate of change of vertical relative force } (F_{RV}) = [(\text{Maximum value of vertical relative force } (F_{VR1}) - \text{Minimum value of vertical relative force } (F_{VR2})) / \text{Minimum value of vertical relative force } (F_{VR2})] \times 100 \qquad \text{Equation 1}$$

As the rate of change of the vertical relative force is 300 % or less in the second positive active material layer, when measured by utilizing the surface and interfacial cutting analysis system (SAICAS), uniformity of distribution of constituents in the second positive electrode may be improved. In one or more embodiments, because a side reaction and an increase in internal resistance due to non-substantially uniform distribution of components in the second positive active material layer are suppressed or reduced, reversibility of the electrode reaction may be improved. Even in the case of the second positive electrode having a high loading, cycle characteristics of the lithium battery may be improved.

In the second positive active material layer, when measured by utilizing SAICAS, a ratio of a second horizontal force ($F_{H2}$) at a second point to a first horizontal force ($F_{H1}$) at a first point may be, for example, 50 % or more, wherein the first point is separated 10 % from the surface of the second positive active material layer in the direction of the second positive current collector, and the second point is separated 10 % from the surface of the second positive current collector in the direction of the second positive active material layer (for example, depth direction), with respect to the total depth from the surface of the second positive active material layer to the surface of the second positive current collector. The first horizontal force ($F_{H1}$) refers to a first horizontal binding force. The second horizontal force ($F_{H1}$) refers to a second horizontal binding force. The ratio of horizontal forces is, for example, 50 % to 100 %, 60 % to 100 %, 70 % to 100 %, 80 % to 100 %, or 90 % to 100 %. The second point separated 10 % from the surface of the second positive current collector in the direction of the second positive active material layer corresponds to, for example, a point separated 90 %, with respect to the entire thickness of the second positive active material layer, from the surface of the second positive active material layer in the direction of the second positive current collector. The ratio of horizontal forces is, for example, stated by Equation 2. For a measurement method utilizing SAICAS, refer to Evaluation Example 2, for example.

## Equation 2

$$\text{Ratio of horizontal forces} = [\text{Second horizontal force } (F_{H2}) / \text{First horizontal force } (F_{H1})] \times 100$$

As the ratio of the horizontal forces is 50 % or more, when measured by utilizing SAICAS, uniformity of distribution of constituents in the second positive electrode is further improved. As the second positive electrode has the ratio of the horizontal force within this range, cycle characteristics of the lithium battery employing the second positive electrode are further improved.

The above-described first positive active material layer and the second positive active material layer may include a first positive active material and a second positive active material, respectively.

The first positive active material and/or the second positive active material may be, for example, lithium metal oxide, but any one generally available/generally utilized in the art may be utilized without limitation.

The first positive active material and/or the second positive active material may be, for example, one or more of a complex oxide of lithium and a metal including (e.g., selected from) cobalt, manganese, nickel, and/or combinations thereof, for specific examples, any compound represented by any one of the following formulas may be utilized, the formulas including: $Li_aA_{1-b}B_bD_2$ (wherein $0.90 \leq a \leq 1$, and $0 \leq b \leq 0.5$); $Li_aE_{1-b}B_bO_{2-c}D_b$ (wherein $0.90 \leq a \leq 1$, $0 \leq b \leq 0.5$, and $0 \leq c \leq 0.05$); $LiE_{2-b}B_bO_{4-c}D_c$ (wherein $0 \leq b \leq 0.5$, and $0 \leq c \leq 0.05$); $Li_aNi_{1-b-c}Co_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (wherein $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (wherein $0.90 \leq a \leq 1$, $0 \leq b \leq 0.5$, $0 \leq c \leq 0.05$, and $0 < \alpha < 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1$.); $Li_aNi_bCo_cMn_dG_eO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$ and $0.001 \leq b \leq 0.1$); $Li_aCoG_bO_2$ (wherein $0.90 \leq a \leq 1$ and $0.001 \leq b \leq 0.1$); $Li_aMnG_bO_2$ (wherein $0.90 \leq a \leq 1$ and $0.001 \leq b \leq 0.1$); $Li_aMn_2G_bO_4$ (wherein $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3f)}Fe_2(PO_4)_3$ ($0 \leq f \leq 2$); and $LiFePO_4$.

In the formulas representing the above-described compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound to which a coating layer is added on the surface of the above-described compound may be utilized, and a mixture of the above-described compound and the compound to which a coating layer is added may also be utilized. The coating layer added on the surface of the above-described compound may include, for example, coating element compounds such as an oxide of the coating element, a hydroxide of the coating element, an oxyhydroxide of the coating element, an oxycarbonate of the coating element, or a hydroxycarbonate of the coating element. The compound that forms such a coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming a coating layer may be utilized as long as the method does not adversely affect the physical properties of the positive active material. A coating method may be, for example, a spray coating method, an immersion method, etc. Specific coating methods may be well understood by those skilled in the art, and a detailed description is omitted.

A content (e.g., amount) of the first positive active material included in the first positive active material layer is, for example, 80 wt% to 98 wt%, or 90 wt% to 98 wt%, with respect to the total weight of the first positive active material layer. A content (e.g., amount) of the second positive active material included in the second positive active material layer is, for example, 80 wt% to 98 wt%, or 90 wt% to 98 wt%, with respect to the total weight of the second positive active material layer.

The first positive active material and/or the second positive active material may include, for example, a composite positive active material.

The composite positive active material includes, for example, a core including a lithium transition metal oxide; and a shell arranged along the surface of the core, wherein the shell includes at least one first metal oxide represented by a formula $M_aO_b$ ($0<a\leq3$, $0<b<4$, when a is 1, 2, or 3, b is not an integer); and graphene, the first metal oxide is arranged in a graphene matrix, M is at least one metal of (e.g., selected from) groups 2 to 13, 15 and/or 16 of the periodic table of elements, and the lithium transition metal oxide contains nickel, and a content (e.g., amount) of nickel is 80 mol% or more, with respect to the total number of moles of the transition metals. A shell including a first metal oxide and graphene is arranged on the core of the composite positive active material.

Graphene in the related art is difficult to be uniformly coated on the core due to agglomeration. In contrast, the composite positive active material uses a composite including a plurality of first metal oxides arranged on a graphene matrix, thereby preventing or reducing aggregation of graphene, and the shell may be uniformly arranged on the core. Accordingly, by effectively blocking the contact between the core and the electrolyte, side reactions caused by the contact between the core and the electrolyte are prevented or reduced. In one or more embodiments, reduction of nickel ions ($Ni^{3+}$->$Ni^{2+}$) and cation mixing by the electrolyte are suppressed or reduced, thereby suppressing generation of a resistance layer such as a NiO phase. Furthermore, elution of nickel ions is also suppressed or reduced. Because the shell including graphene has flexibility and easily accommodates volume changes of the composite positive active material during charging and discharging, an occurrence of cracks inside the composite positive active material is suppressed or reduced. Because graphene has high electronic conductivity, interfacial resistance between the composite positive active material and the electrolyte is reduced. Accordingly, the internal resistance of the lithium battery is maintained or reduced despite the introduction of a shell including graphene. In one or more embodiments, because the first metal oxide has voltage resistance, it is possible to prevent or reduce deterioration of the lithium transition metal oxide included in the core during charging and discharging at a high voltage. As a result, cycle characteristics and high temperature stability of a lithium battery including the composite positive active material are improved. The shell may include, for example, a first metal oxide of one kind or first metal oxides of two or more different kinds. In one or more embodiments, in the composite positive active material, even though the lithium transition metal oxide has a high nickel content (e.g., amount) of 80 mol% or more, with respect to the total number of moles of the transition metals, high discharge capacity and cycle characteristics may be concurrently (e.g., simultaneously) provided due to the arrangement of the shell including the first metal oxide and graphene on the core. Therefore, the composite positive active material having a high nickel content (e.g., amount) of 80 mol% or more is capable of providing improved capacity compared to the composite positive active material having a relatively low nickel content (e.g., amount), while still providing excellent or suitable lifespan characteristics. The metal included in the first metal oxide may be, for example, at least one of (e.g., one selected from) Al, Nb, Mg, Sc, Ti, Zr, V, W, Mn, Fe, Co, Pd, Cu, Ag, Zn, Sb, and/or Se.

The first metal oxide may be, for example, at least one of (e.g., one selected from) $Al_2O_z$($0<z<3$), $NbO_x$($0<x<2.5$), $MgO_x$($0<x<1$), $Sc_2O_z$($0<z<3$), $TiO_y$($0<y<2$), $ZrO_y$($0<y<2$), $V_2O_z$($0<z<3$), $WO_y$($0<y<2$), $MnO_y$($0<y<2$), $Fe_2O_z$($0<z<3$), $Co_3O_w$($0<w<4$), $PdO_x$($0<x<1$), $CuO_x$($0<x<1$), $AgO_x$($0<x<1$), $ZnO_x$($0<x<1$), $Sb_2O_z$($0<z<3$), and/or $SeO_y$($0<y<2$). By arranging the first metal oxide in the graphene matrix, uniformity of the shell arranged on the core is improved, and voltage resistance of the composite positive active material is further improved. For example, the shell includes $Al_2O_x$ ($0<x<3$) as the first metal oxide. The shell may further include at least one kind of a second metal oxide represented by a formula $M_aO_c$ ($0<a\leq3$, $0<c\leq4$, when a is 1, 2, or 3, c is an integer). M is at least one metal of (e.g., one selected from) groups 2 to 13, 15 and/or 16 of the periodic table of elements. For example, the second metal oxide includes the same metal as the first metal oxide, and c/a, which is a ratio of a and c of the second metal oxide, has a greater value than b/a, which is a ratio of a and b of the first metal oxide. For example, c/a >b/a. The second metal oxide is (e.g., is selected from), for example, $Al_2O_3$, NbO, $NbO_2$, $Nb_2O_5$, MgO, $SC_2O_3$, $TiO_2$, $ZrO_2$, $V_2O_3$, $WO_2$, $MnO_2$, $Fe_2O_3$, $CO_3O_4$, PdO, CuO, AgO, ZnO, $Sb_2O_3$, and/or $SeO_2$. The first metal oxide is a reduced product of the second metal oxide. A first metal oxide is obtained by reducing some or all of the second metal oxide. Accordingly, the first metal oxide has a lower oxygen content (e.g., amount) and a higher oxidation number of metal than the second metal oxide. For example, the shell includes $Al_2O_x$ ($0<x<3$), as a first metal oxide, and $Al_2O_3$ as a second metal oxide. In a composite positive active material, for example, graphene included in the shell and the transition metal of lithium transition metal oxide included in the core are chemically bound through a chemical bonding. The carbon atom (C) of graphene included in the shell and the transition metal (Me) of the lithium transition metal oxide are chemically bound through, for example, a C-O-Me bond (for example, a C-O-Ni bond) via an oxygen atom. The core and the shell are complexed by a chemical bonding between graphene included in the shell and the lithium transition metal oxide included in the core through a chemical bonding. Thus, the composite positive active material is distinguished from a simple physical mixture of graphene and lithium transition metal oxide. In one or more embodiments, the first metal oxide and the graphene included in the shell are also chemically bound through a chemical bond. Here, the chemical bond is, for example, a covalent bond or an ionic bond. The covalent bond is, for example, a bond including at least one of an ester group, an ether group, a carbonyl group, an amide group, a carbonate anhydride group, and an acid anhydride group. The ionic bond is a bond including, for example, a carboxylate ion, an ammonium ion, an acyl cation group, and/or the like. A thickness of the shell is, for example, 1 nm to 5 μm, 1 nm to 1 μm, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, 1 nm to 20 nm, or 1 nm to 10 nm. An increase of internal resistance of the lithium battery included in the composite positive active material is suppressed or reduced by the shell having a thickness in this range.

A content (e.g., amount) of the composite included in the composite positive active material may be 3 wt% or less, 2 wt% or less, 1 wt% or less, 0.5 wt% or less, 0.2 wt% or less of the total weight of the composite positive active material. The content (e.g., amount) of the composite may be 0.01 wt% to 3 wt%, 0.01 wt% to 1 wt%, 0.01 wt% to 0.7 wt%, 0.01 wt% to 0.6 wt%, 0.1 wt% to 0.5 wt%, 0.01 wt % to 0.2 wt%, 0.01 wt% to 0.1 wt%, or 0.03 wt% to 0.07 wt% of the total weight of the composite positive active material. As the composite positive active material includes the composite in this range, cycle characteristics of the lithium battery including the composite positive active material are further improved. An average particle diameter of at least one of (e.g., one selected from) the first metal oxide and/or the second metal oxide included in the composite may be 1 nm to 1 μm, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, or 7 nm to 20 nm. The first metal oxide and/or the second metal oxide may be more uniformly distributed in the graphene matrix of the composite by having a particle diameter within the nano range. Therefore, such a composite may be uniformly coated on the core without agglomeration to form a shell. In one or more embodiments, the first metal oxide and/or the second metal oxide may be more uniformly arranged on the core by having a particle diameter within this range. Accordingly, as the first metal oxide and/or the second metal oxide are uniformly arranged on the core, voltage resistance characteristic may be more effectively exhibited. Average particle diameters of the first metal oxide and the second metal oxide are measured by utilizing, for example, a measuring device employing a laser diffraction method or a dynamic light scattering method. An average particle diameter is measured by utilizing, for example, a laser scattering particle diameter distribution meter (for example, Horiba's LA-920), and is a value of a median particle diameter (D50) when 50 % is accumulated from the side of small particles in volume conversion.

The core included in the composite positive active material includes, for example, a lithium transition metal oxide represented by the following Formula 1:

Formula 1　　　　$Li_aNi_xCo_yM_zO_{2-b}A_b$,

In Formula 1, $1.0\leq a\leq1.2$, $0\leq b\leq0.2$, $0.8\leq x<1$, $0\leq y\leq0.3$, $0<z\leq0.3$, and $x+y+z=1$, M includes at least one of (e.g., one selected from) manganese (Mn), niobium (Nb) ), vanadium (V), magnesium (Mg), gallium (Ga), silicon (Si), tungsten (W), molybdenum (Mo), iron (Fe), chromium (Cr), copper (Cu), zinc (Zn) ), titanium (Ti), aluminum (Al), and/or boron (B), A is F, S, Cl, Br, or a combination thereof.

The core included in the composite positive active material includes, for example, a lithium transition metal oxide represented by the following Formulas 2 to 4:

Formula 2　　　　$LiNi_xCo_yMn_zO_2$,

Formula 3　　　　$LiNi_xCo_yAl_zO_2$,

In Formula 2 and Formula 3, $0.8\leq x\leq0.95$, $0\leq y\leq0.2$, $0<z\leq0.2$, and $x+y+z=1$,

Formula 4　　　　$LiNi_xCo_yAl_vMn_wO_2$

In Formula 4, $0.8\leq x\leq0.95$, $0\leq y\leq0.2$, $0<v\leq0.2$, $0<w\leq0.2$, and $x+y+v+w=1$.

A lithium battery includes an electrolyte arranged between a positive electrode and a negative electrode in all of a plurality of positive electrodes and a plurality of negative electrodes.

The electrolyte included in the lithium battery is, for example, a liquid electrolyte or a solid electrolyte. The solid electrolyte is, for example, an oxide-based solid electrolyte or a sulfide-based solid electrolyte.

The lithium battery is, for example, a lithium ion battery, a lithium solid battery, a lithium air battery, etc.

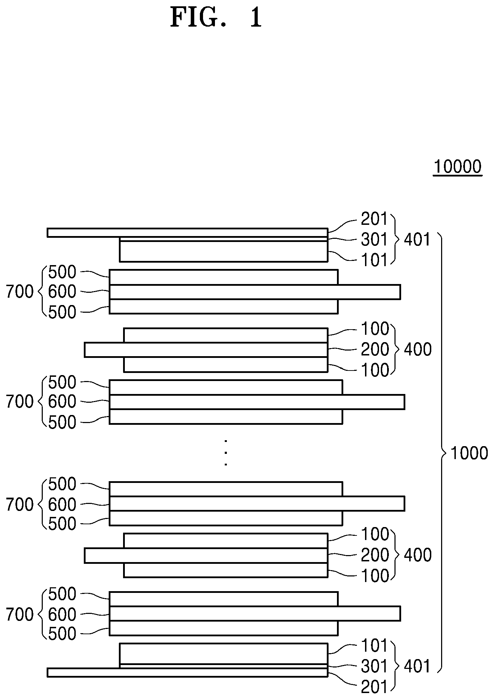

Referring to FIG. 1, a lithium battery 10000 includes an electrode group stack 1000 in which a plurality of positive electrodes 400 and 401 and one or more negative electrodes 700 are alternately stacked in a thickness direction, the plurality of positive electrodes 400 and 401 include a first positive electrode 400 and a second positive electrode 401, the first positive electrode 400 is an inner layer of the electrode group stack 1000, and the second positive electrode 401 is the outermost layer of the electrode group stack 1000, the first positive electrode 400 includes a first positive current collector 200 and a first positive active material layer 100, the first positive active material layer 100 is arranged on both surfaces (e.g., opposite surfaces or sides) of the first positive current collector 200, the second positive electrode 401 includes a second positive current collector 201, a second positive active material layer 101, and an interlayer 301 arranged between the second positive current collector 201 and the second positive active material layer 101, the second positive current collector 201 includes a first surface and a second surface, the first surface faces the inner layer, and the second surface is an opposite surface of the first surface, the second positive active material layer 201 is arranged on the first surface, not on the second surface, and a thickness of the second positive current collector 201 is equal to, or smaller than a thickness of the first positive current collector 100. The negative electrode 700 includes a negative current collector 600 and a negative active material layer 500. A number of the first positive electrode 400 and the negative electrode 700 may each independently be 1 to 500, 1 to 400, 1 to 300, 1 to 200, 1 to 100, 1 to 50, or 1 to 30.

A lithium battery according to one or more embodiments includes an electrode group stack in which a plurality of negative electrodes and one or more positive electrodes are alternately stacked in a thickness direction, wherein the plurality of negative electrodes includes a first negative electrode and a second negative electrode, the first negative electrode is an inner layer of the electrode group stack, and the second negative electrode is the outermost layer of the electrode group stack, the first negative electrode includes a first negative current collector, and a first negative active material layer, wherein the first negative active material layer is arranged on both surfaces (e.g., opposite surfaces or sides) of the first negative current collector, the second negative electrode includes a second negative current collector, a second negative active material layer, and an interlayer arranged between the second negative current collector and the second negative active material layer, the second negative current collector includes a first surface and a second surface, wherein the first surface faces the inner layer, and the second surface is an opposite surface of the first surface, the second negative active material layer is arranged on the first surface, and not arranged on the second surface, and a thickness of the second negative current collector is equal to or smaller than a thickness of the first negative current collector.

In the lithium battery of the present disclosure, the second negative electrode arranged on the outermost layer of the electrode group stack includes an interlayer between the second negative current collector and the second negative active material layer, thereby suppressing or reducing bending of the second negative electrode. Accordingly, the occurrence of defects such as curling and bending of the second negative electrode during the manufacturing process of the electrode group stack is suppressed or reduced. In one or more embodiments, because the second negative electrode is a single-sided electrode, the energy density of the lithium battery including the electrode group stack is improved. In one or more embodiments, as the thickness of the second negative current collector arranged in the second negative electrode is equal to the thickness of the first negative current collector arranged in the first negative electrode, or as the thickness of the second negative current collector arranged in the second negative electrode is smaller than the thickness of the first negative current collector arranged in the first negative electrode, energy density of the lithium battery is improved. In one or more embodiments, the occurrence of defects in the manufacturing process of the electrode group stack is suppressed or reduced. Because the interlayer provides a binding force between the second negative current collector and the second negative active material layer, a pressure required for binding the second negative current collector and the second negative active material layer is reduced when the second negative electrode is prepared. Accordingly, bending of the second negative electrode is suppressed or reduced.

A method of preparing the lithium battery according to one or more embodiments includes: preparing a dry mixture by dry mixing a second positive active material, a dry conductive material, and a dry binder; providing a second positive current collector; arranging an interlayer on one surface of the second positive current collector; and placing and roll-pressing the dry mixture on the interlayer to prepare a second positive electrode having a second positive active material layer arranged on one surface of the second positive current collector, wherein the lithium battery includes: an electrode group stack in which a plurality of positive electrodes and one or more negative electrodes are alternately stacked in a thickness direction, the plurality of positive electrodes includes a first positive electrode and a second positive electrode, the first positive electrode is an inner layer of the electrode group stack, and the second positive electrode is the outermost layer of the electrode group stack, the first positive electrode includes a first positive current collector, and a first positive active material layer, wherein the first positive active material layer is arranged on both surfaces of the first positive current collector, the second positive electrode includes a second positive current collector, a second positive active material layer, and an interlayer arranged between the second positive current collector and the second positive active material layer, the second positive current collector includes a first surface and a second surface, wherein the first surface faces the inner layer, and the second surface is an opposite surface of the first surface, the second positive active material layer is arranged on the first surface, and not arranged on the second surface, and a thickness of the second positive current collector is equal to or smaller than a thickness of the first positive current collector. In the lithium battery prepared by the above-described preparation method, generation of defects may be suppressed or reduced during the manufacturing process, and improved energy density may be provided.

First, a second positive electrode is provided. The second positive electrode may be prepared, for example, by the following method.

A method of preparing the second positive electrode includes: preparing a dry mixture by dry mixing a second positive active material, a dry conductive material, and a dry binder; providing a second positive current collector; arranging an interlayer on one surface of the second positive current collector; and placing and roll-pressing the dry mixture on the interlayer to prepare a second positive electrode having a second positive active material layer arranged on one surface of the second positive current collector. The second positive active material is a dry positive active material.

First, a dry mixture is prepared by dry mixing a second positive active material, a dry conductive material, and a dry binder. Dry mixing refers to mixing in a state that does not include a process solvent. The process solvent is, for example, a solvent utilized in a preparation of electrode slurry. The process solvent is, for example, water, NMP, etc., but the present disclosure is not limited thereto, and the present disclosure is not limited as long as it is a process solvent utilized in a preparation of electrode slurry. The dry mixing may be carried out, for example, at a temperature of 25 °C to 65 °C, by utilizing a stirrer. The dry mixing may be performed by utilizing a stirrer, for example, at a rotation speed of 10 rpm to 10,000 rpm, or 100 rpm to 10,000 rpm. The dry mixing may be performed by utilizing a stirrer, for example, for 1 minute to 200 minutes, or 1 minute to 150 minutes. The second positive active material is a dry positive active material.

The dry mixing may be performed, for example, at least once. First, a first dry mixture is prepared by primarily dry mixing the second positive active material, the dry conductive material, and the dry binder. The primary dry mixing may be performed, for example, at a temperature of 25 °C to 65 °C, at a rotation speed of 2,000 rpm or less, for 15 minutes or less. The primary dry mixing may be performed, for example, at a temperature of 25 °C to 65 °C, at a rotation speed of 500 rpm to 2,000 rpm, for 5 minutes to 15 minutes. The electrode active material, the dry conductive material, and the dry binder may be uniformly mixed by the primary dry mixing. Then, a second mixture is prepared by secondarily dry mixing the electrode active material, the dry conductive material, and the dry binder. The secondary dry mixing may be performed, for example, at a temperature of 25 °C to 65 °C, at a rotation speed of 4,000 rpm or more, for 10 minutes or more. The secondary dry mixing may be performed, for example, at a temperature of 25 °C to 65 °C, at a rotation speed of 4,000 rpm to 9,000 rpm, for 10 minutes to 60 minutes. A dry mixture including a fibrillized dry binder may be obtained by the secondary dry mixing.

The stirrer is, for example, a kneader. The stirrer may include, for example, a chamber; one or more rotating shafts arranged inside the chamber to rotate; and a blade, which is bound to the rotation shaft to be rotatable, and arranged in the longitudinal direction of the rotation shaft. The blade may be, for example, one or more of (e.g., one or more selected from) a ribbon blade, a sigma blade, a Z blade, a dispersion blade, and/or a screw blade. By including the blade, it is possible to prepare a dough-like mixture by effectively mixing the electrode active material, the dry conductive material, and the dry binder without a solvent.

The prepared dry mixture may be introduced into an extrusion device and extruded in a form of a sheet. A pressure at the time of extrusion may be, for example, 4 MPa to 100 MPa, or 10 MPa to 90 MPa. The obtained sheet-form extrudate may be a sheet for the second positive active material layer.

The dry conductive material may include carbonaceous material such as carbon black, graphite fine particles, natural graphite, artificial graphite, acetylene black, ketjen black, carbon fiber, carbon nanotubes; metal powder, metal fiber or metal tube of copper, nickel, aluminum, or silver; and/or conductive polymers such as polyphenylene derivatives, but the present disclosure is not limited thereto, and any conductive material utilized in the art may be utilized. The conductive material is, for example, a carbon-based conductive material.

Examples of the dry binder include vinylidene fluoride/hexafluoropropylene copolymer, polyvinylidene fluoride, polyacrylonitrile, polymethylmethacrylate, polytetrafluoroethylene (PTFE), mixtures of the aforementioned polymers, styrene butadiene rubber-based polymer and/or the like, but the present disclosure is not necessarily limited thereto, and any binder utilized in the art may be utilized.

It is also possible to form pores in the electrode plate by further adding a plasticizer or a pore former to the electrode active material composition.

A content (e.g., amount) of the electrode active material, the dry conductive material, and the dry binder utilized in the electrode active material layer is as described above.

Next, a second positive current collector is provided. Materials of the second positive current collector are as described above. The second positive current collector is, for example, aluminum foil.

Next, an interlayer is arranged on one surface of the second positive current collector. The arranging of the interlayer on one surface of the second positive current collector may be arranging the interlayer on one surface of the second positive current collector by a dry or wet method. For a specific arrangement method, refer to the above-described section about the second positive electrode including an interlayer. In one or more embodiments, an interlayer may be arranged on both surfaces of the second positive current collector.

Next, a second positive electrode, in which a second positive active material layer is arranged on one surface of the second positive current collector, is prepared by arranging the prepared sheet for the second positive active material on the interlayer and roll-pressing. An interlayer is arranged between the second positive current collector and the second positive active material layer. The roll-pressing may be, for example, a roll-pressing, a flat-pressing, and/or the like, but the present disclosure is not necessarily limited thereto. Pressure at the time of roll-pressing is, for example, 0.1 ton/cm$^2$ to 10.0 ton/cm$^2$. When the pressure during roll-pressing is excessively increased, cracks may be generated in the second positive current collector. When the pressure during roll-pressing is too low, the binding force between the second positive current collector and the second positive active material layer may be reduced.

Next, a first positive electrode is prepared. The first positive electrode may be prepared in substantially the same manner as the second positive electrode. For example, the first positive electrode may be prepared by a dry method.

In one or more embodiments, the first positive electrode may be prepared by a wet method. The first positive electrode is prepared by, for example, the following example method, but the present disclosure is not necessarily limited thereto, and the method may be adjusted according to required conditions.

A preparation method of the first positive electrode may include, for example, preparing slurry by mixing a first positive active material, a conductive material, a binder, and a process solvent; providing a first positive current collector; and arranging the slurry on both sides of the first positive current collector and roll-pressing, to prepare a first positive electrode having first positive active material layers arranged on both sides of the first positive current collector.

First, slurry for a first positive electrode is prepared by mixing a first positive active material, a conductive material, a binder, and a process solvent.

The first positive active material is as described above. The first positive active material may be, for example, lithium metal oxide, but any one generally available/generally utilized in the art may be utilized without limitation. The first positive electrode may utilize, for example, the above-described composite positive active material as the first positive active material.

The conductive material may include, for example, carbon black, graphite fine particles, natural graphite, artificial graphite, acetylene black, ketjen black, and carbon fiber; carbon nanotubes; metal powder, metal fiber or metal tube of copper, nickel, aluminum, or silver; and/or conductive polymers such as polyphenylene derivatives, but the present disclosure is not limited thereto, and any conductive material utilized in the art may be utilized. In one or more embodiments, the first positive electrode may not include (e.g., may exclude), for example, a separate conductive material.

Examples of the binder include vinylidene fluoride/hexafluoropropylene copolymer, polyvinylidene fluoride, polyacrylonitrile, polymethylmethacrylate, polytetrafluoroethylene (PTFE), styrene butadiene rubber-based polymer (e.g., SBR), one or more mixtures of the aforementioned polymers, and/or the like, but the present disclosure is not necessarily limited thereto, and any binder utilized in the art may be utilized.

As the process solvent, for example, N-methylpyrrolidone (NMP), acetone, water, etc. may be utilized, but the present disclosure is not necessarily limited thereto, and any process solvent utilized in the art may be utilized.

It is also possible to form pores in the first positive electrode by further adding a plasticizer or a pore former to the slurry for the first positive electrode.

Contents of the first positive active material, the conductive material, and the binder utilized for manufacturing the first positive electrode may be, for example, in the range utilized in the above-described second positive electrode. According to the utilization and configuration of the first positive electrode, it is possible to omit at least one of the conductive material and/or the binder.

A content (e.g., amount) of the binder included in the first positive electrode may be 0.1 wt% to 10 wt% or 0.1 wt% to 5 wt% of the total weight of the first positive active material layer. A content (e.g., amount) of the first positive active material included in the first positive electrode may be 90 wt% to 99 wt% or 95 wt% to 99 wt% of the total weight of the first positive active material layer.

Next, a first positive current collector is provided. Materials of the first positive current collector are as described above. The first positive current collector is, for example, aluminum foil. A thickness of the first positive current collector is, for example, greater than that of the second positive current collector.

Next, the prepared slurry for the first positive electrode is arranged on both surfaces of the first positive current collector and roll-pressed to prepare a first positive electrode having first positive active material layers arranged on both sides of the first positive current collector. For example, slurry for the first positive electrode is prepared by mixing a first positive active material, a conductive material, a binder, and a process solvent, and the slurry is coated on both sides of an aluminum current collector to prepare a first positive electrode. In one or more embodiments, a first positive electrode is prepared by casting the prepared slurry for the first positive electrode on a separate support, and laminating each of the two sheets peeled from the support, which are for the first positive electrode, on both surfaces of an aluminum current collector.

Next, a negative electrode is prepared as follows.

The negative electrode is prepared in substantially the same manner as the first positive electrode except that, for example, a negative active material is utilized instead of the first positive active material. For example, a negative active material composition is prepared by mixing a negative active material, a conductive material, a binder, and a process solvent, and a negative electrode plate is prepared by directly coating the negative active material composition on a copper current collector. In one or more embodiments, a negative electrode plate is prepared by casting the prepared negative active material composition on a separate support and laminating the negative active material sheet peeled from the support on a copper current collector. In one or more embodiments, the negative electrode may be prepared by a dry method, as the second positive electrode.

For the negative active material, any that may be utilized as a negative active material in the related art may be utilized. For example, the negative active material may include one or more of (e.g., one or more selected from) lithium metals, metals alloyable with lithium, transition metal oxides, non-transition metal oxides, and/or carbon-based materials. The metals alloyable with lithium may be, for example, Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and/or the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The transition metal oxide is, for example, a lithium titanium oxide, a vanadium oxide, a lithium vanadium oxide, and/or the like. The non-transition metal oxides are, for example, $SnO_2$, $SiO_x$ ($0<x<2$), and/or the like. The carbon-based material is, for example, crystalline carbon, amorphous carbon, or mixtures thereof. The crystalline carbon is, for example, graphite, such as natural or artificial graphite, in an amorphous, plate-like, flake-like, spherical, or fibrous form. The amorphous carbon is, for example, soft carbon (carbon calcined at a low temperature) or hard carbon, mesophase pitch carbide, calcined coke, and/or the like.

The types (kinds) of the conductive materials, binders, and process solvents utilized for manufacturing the negative electrode may be materials generally available/generally utilized for manufacturing lithium batteries. The kind of the conductive material, binder, and process solvent utilized in manufacturing a negative electrode may be selected from materials utilized for manufacturing the first positive electrode.

A content (e.g., amount) of the negative active material, conductive material, binder, and process solvent utilized in manufacturing a negative electrode is a level generally available/generally utilized in lithium batteries. Depending on the utilization and configuration of the negative electrode, one or more of the conductive material, binder, and solvent may not be provided.

The negative current collector is, for example, copper foil.

A content (e.g., amount) of the binder included in the negative electrode may be, for example, 0.1 wt% to 10 wt% or 0.1 wt% to 5 wt% of the total weight of the negative active material layer. A content (e.g., amount) of the conductive material included in the negative electrode may be, for example, 0.1 wt% to 10 wt% or 0.1 wt% to 5 wt% of the total weight of the negative active material layer. A content (e.g., amount) of the negative active material included in the negative electrode may be 80 wt% to 98 wt%, or 90 wt% to 95 wt% of the total weight of the negative active material layer. When the negative active material is lithium metal, the negative electrode may not include (e.g., may exclude) a binder and a conductive material.

Next, a separator to be inserted between the first positive electrode and the negative electrode and between the second positive electrode and the negative electrode is prepared.

For the separator, all that are utilized in a lithium battery in the art may be utilized. For the separator, for example, a separator having low resistance to ion movement of the electrolyte and an excellent or suitable impregnation ability to contain the electrolyte is utilized. The separator is, for example, selected from glass fiber, polyester, Teflon, polyethylene, polypropylene, polytetrafluoroethylene (PTFE), or combinations thereof, and is in a form of a nonwoven or woven fabric. For example, a winding separator such as polyethylene, polypropylene, and/or the like may be utilized in a lithium ion cell, and a separator having an excellent or suitable impregnation ability of an organic electrolyte solution may be utilized in a lithium ion polymer cell.

The separator is prepared by, for example, the following example method, but the present disclosure is not necessarily limited thereto, and the method may be adjusted according to required conditions.

First, a separator composition is prepared by mixing a polymer resin, a filler, and a solvent. The separator composition is directly coated on the electrode and dried to form a separator. In one or more embodiments, after the separator composition is casted and dried on a support, a separator film peeled from the support is stacked on an electrode to form a separator.

The polymer utilized for manufacturing the separator is not particularly limited, and any polymer utilized for the binder of the electrode plate may be utilized. For example, vinylidene fluoride/hexafluoropropylene copolymer, polyvinylidene fluoride (PVDF), polyacrylonitrile, polymethyl methacrylate, or a mixture thereof, may be utilized.

Next, an electrolyte is prepared.

The electrolyte is, for example, an organic electrolyte. The organic electrolyte is prepared by, for example, dissolving a lithium salt in an organic solvent.

For the organic solvent, all that may be utilized as an organic solvent in the art may be utilized. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, N,N-dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For the lithium salts, all that may be utilized as lithium salts in the art may be utilized. The lithium salts may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (each of x and y are 1 to 20), LiCl, LiI, or a mixture thereof.

In one or more embodiments, the electrolyte is a solid electrolyte. The electrolyte may be, for example, boron oxide, lithium oxynitride, and/or the like, but the present disclosure is not limited thereto, and all that may be utilized as a solid electrolyte in the related art may be utilized. The solid electrolyte is formed on the negative electrode by, for example, sputtering, or a separate solid electrolyte sheet is stacked on the negative electrode. The solid electrolyte is, for example, an oxide-based solid electrolyte or a sulfide-based solid electrolyte. When a solid electrolyte is utilized, the separator may not be provided.

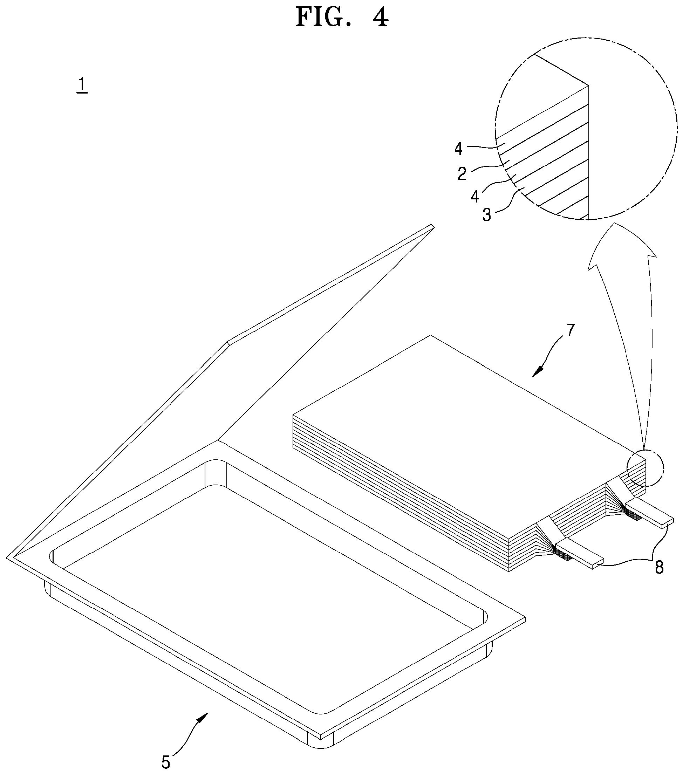

Referring to FIG. 4, a lithium battery 1 according to one or more embodiments includes a positive electrode 3, a negative electrode 2, and a separator 4. The separator 4 is arranged between the positive electrode 3 and the negative electrode 2 to form a battery structure 7. The battery structure 7 is stacked in a bi-cell structure, and then accommodated in a battery case 5. The stacked structure of the battery structure 7 is not limited to the bi-cell. An electrode tab 8 serving as an electrical path for inducing the current formed in the battery structure 7 to the outside may be included. An organic electrolyte is injected into the battery case 5 and sealed to complete the lithium battery 1. The battery case 5 may be a prismatic type or kind, but the present disclosure is not necessarily limited to such a shape and may be, for example, cylindrical type or kind, thin film type or kind, and/or the like.

A pouch-type or kind lithium battery corresponds to a lithium battery of FIG. 4 which uses a pouch as a battery case. The pouch-type or kind lithium battery includes one or more battery structures. A separator may be arranged between a positive electrode and a negative electrode to form the battery structure. After the battery structures are stacked in a bi-cell structure, the battery structures are impregnated in an organic electrolyte, and accommodated and sealed in a pouch to complete a pouch-type or kind lithium battery. For example, although not shown in the drawings, the above-described positive electrode, negative electrode, and separator are simply stacked and accommodated in a pouch in a form of an electrode assembly. Then, an organic electrolyte is injected into the pouch and the pouch is sealed to complete the lithium battery.

Because the lithium battery is excellent or suitable in lifespan characteristics and high-rate characteristics, the lithium battery may be utilized in electrical vehicles (EV). For example, the lithium battery may be utilized in a hybrid vehicle such as plug-in hybrid electric vehicle (PHEV). Furthermore, the lithium battery may be utilized in a field in which a large amount of power storage is required. For example, the lithium battery is utilized in electric bicycles, power tools, and/or the like.

A plurality of lithium batteries are stacked to form a battery module, and a plurality of battery modules form a battery pack. Such a battery pack may be utilized in any device requiring high capacity and high output. For example, the battery pack may be utilized in a laptop, a smartphone, an electric vehicle, etc. The battery module includes, for example, a plurality of batteries and a frame for holding them. The battery pack includes, for example, a plurality of battery modules and a bus bar connecting them. The battery module and/or battery pack may further include a cooling device. A plurality of battery packs are controlled or selected by a battery management system. The battery management system includes a battery pack and a battery control device connected to the battery pack.

The present disclosure will be described in more detail through the following examples and comparative examples. However, the examples are intended to illustrate the present disclosure, and the scope of the present disclosure is not limited thereto.

**Preparation of lithium battery**

**Example 1: Inner layer wet first positive electrode (double-sided), outermost layer dry second positive electrode (single-sided), thickness of first positive current collector > thickness of second positive current collector**

**Preparation of first positive electrode**

A mixture of $LiNi_{0.91}Co_{0.05}Al_{0.04}O_2$ (hereinafter referred to as NCA91) as a first positive active material, carbon black (Denka Black) as a carbon conductive material, and polyvinylidene fluoride (PVdF), which was mixed in a weight ratio of 96:1.8:2.2, was mixed with N-methylpyrrolidone (NMP) in an agate mortar to prepare a slurry. The slurry was bar-coated on both sides of an aluminum thin film having a thickness of 15 $\mu$m, dried at room temperature, and dried again under vacuum conditions at 120 °C, to prepare a stack on which first positive active material layers are introduced on both surfaces of a first positive current collector. The stack was roll-pressed to prepare a first positive electrode. A thickness of the first positive active material layer arranged on one surface of the first positive current collector was 90 $\mu$m. A mixture density of the first positive active material layer was 3.6 g/cm$^3$.

The first positive electrode had a structure of a first positive active material layer/first positive current collector/first positive active material layer.

**Preparation of second positive electrode**

LiNi$_{0.91}$Co$_{0.05}$Al$_{0.04}$O$_2$ (hereinafter referred to as large-diameter NCA91) as a second positive active material, a carbon conductive material (Denka Black) as a dry conductive material, and polytetrafluoroethylene (PTFE) as a dry binder were put into a blade mixer in a weight ratio of 96:1.8:2.2, and primary dry mixed for 10 minutes at a speed of 1,000 rpm at 25 °C, to prepare a first mixture in which the positive active material, the conductive material, and the binder were uniformly mixed.

Subsequently, in order to allow fibrillization of the binder to proceed, the first mixture was further mixed in a secondary mixing at 25 °C, at a speed of 5,000 rpm for 20 minutes, to prepare a second mixture. A separate solvent was not utilized in preparing the first mixture and the second mixture.

The prepared second mixture was put into an extruder and extruded to prepare a self-standing film of the positive active material layer in a form of a sheet. The pressure at the time of extrusion was 50 MPa.

A carbon layer as an interlayer was arranged on one surface of an aluminum thin film having a thickness of 12 $\mu$m to prepare a first stack in which an interlayer was arranged on one surface of a second positive current collector.

The interlayer was prepared by coating a composition including a carbon conductive material (Danka black) and polyvinylidene fluoride (PVDF) on an aluminum thin film and then drying. A thickness of the interlayer arranged on one surface of the aluminum thin film was about 1 $\mu$m.

A positive active material layer self-supporting film was arranged on the interlayer of the prepared first stack to prepare a stack, and the prepared stack was roll-pressed to prepare a second positive electrode.

A thickness of the second positive active material layer was 100 $\mu$m. A mixture density of the second positive active material layer was 3.0 g/cm$^3$.

The second positive electrode had a structure of second positive current collector/interlayer/second positive active material layer.

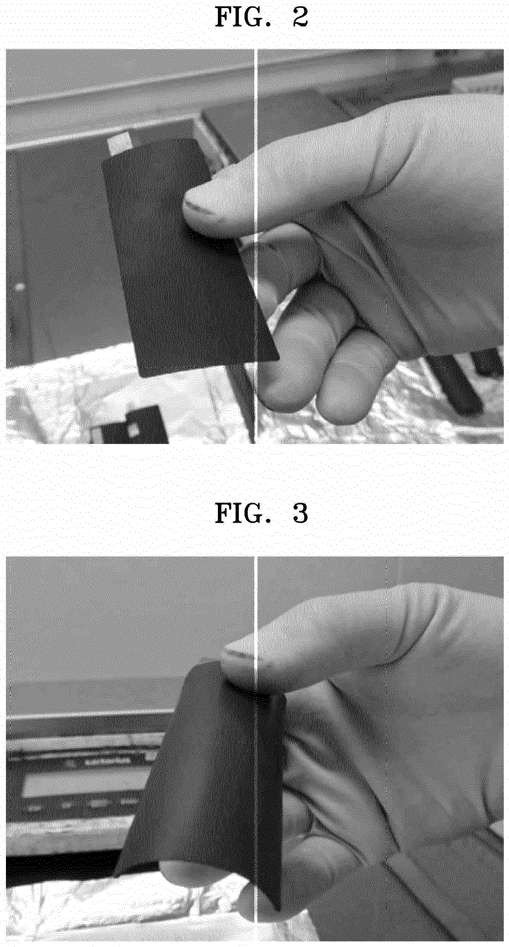

As shown in FIG. 2, the second positive electrode had an almost flat sheet shape.

**Preparation of negative electrode**

Artificial graphite (BSG-L, Tianjin BTR New Energy Technology Co., Ltd.), styrene-butadiene rubber (SBR) binder (ZEON), and carboxymethyl cellulose (CMC, NIPPON A&L) were mixed in a weight ratio of 98:1:1, added to distilled water, and stirred for 60 minutes by utilizing a mechanical stirrer to prepare a negative active material slurry. The prepared slurry was applied to a thickness of about 60 $\mu$m on both sides of 10 $\mu$m-thick copper foil by utilizing a doctor blade, dried in a hot air dryer at 100 °C for 0.5 hours, and dried again for 4 hours under vacuum conditions at 120 °C to prepare a stack. The prepared stack was roll-pressed to prepare a negative electrode.

The negative electrode had structure of a negative active material layer/negative current collector/negative active material layer.

**Preparation of electrode group stack**

After first positive electrodes and negative electrodes were alternately stacked, each of two second positive electrodes were arranged on the uppermost layer and the lowermost layer to prepare an electrode group stack.

The electrode group stack had a structure of second positive electrode/negative electrode/first positive electrode/negative electrode/..../negative electrode/first positive electrode/negative electrode/second positive electrode, along a thickness direction. A separator was each arranged between a first positive electrode and a negative electrode and between a second positive electrode and a negative electrode.

Because the second positive electrode had an almost flat sheet shape, it was easy to match the position of the second positive electrode with the negative electrode in the stacked assembly. Curling in the second positive electrode did not occur during the manufacturing process of the stacked assembly.

**Preparation of pouch cell**

The electrode group stack prepared above was put into an aluminum laminate bag, an electrolyte solution in which 1.3 M of $LiPF_6$ was dissolved in ethylene carbonate (EC) + ethyl methyl carbonate (EMC) + dimethyl carbonate (DMC) (volume ratio 3:4:3) was added to the aluminum laminate bag, and the pouch was vacuum sealed to prepare a pouch cell. A positive electrode terminal and a negative electrode terminal were extended to the outside of the pouch cell.

**Example 2: Inner layer dry first positive electrode (double-sided), outermost layer dry second positive electrode (single-sided), thickness of first positive current collector > thickness of second positive current collector**

A lithium battery was prepared in substantially the same manner as in Example 1, except that a dry positive electrode was utilized as a first positive electrode instead of a wet positive electrode.
An aluminum thin film having a thickness of 15 $\mu$m was utilized as the first positive current collector.
The first positive electrode had a structure of a first positive active material layer/interlayer/first positive current collector/interlayer /first positive active material layer.
Because the second positive electrode had an almost flat sheet shape, it was easy to match the position of the second positive electrode with the negative electrode in the stacked assembly. Curling in the second positive electrode did not occur during the manufacturing process of the stacked assembly.
Therefore, a defect did not occur during the preparation process of the lithium battery.

**Comparative Example 1: Inner layer wet first positive electrode (double-sided), outermost layer wet second positive electrode (single-sided), thickness of first positive current collector > thickness of second positive current collector**

A lithium battery was prepared in substantially the same manner as in Example 1, except that a second positive electrode prepared by a wet method instead of a dry method was utilized.
The second positive electrode was prepared by the following method.

**Preparation of second positive electrode**

A mixture of $LiNi_{0.91}Co_{0.05}Al_{0.04}O_2$ (hereinafter referred to as NCA91) as a second positive active material, carbon black (Denka Black) as a carbon conductive material, and polyvinylidene fluoride (PVdF), which was mixed in a weight ratio of 96:1.8:2.2 was mixed with N-methylpyrrolidone (NMP) in an agate mortar to prepare a slurry. The slurry was bar-coated on one side of an aluminum thin film having a thickness of 12 $\mu$m, dried at room temperature, and dried again under vacuum conditions at 120 °C, to prepare a stack on which a second positive active material layer is introduced on one surface of a second positive current collector. The stack was roll-pressed to prepare a second positive electrode. A thickness of the second positive active material layer arranged on one surface of the second positive current collector was 100 $\mu$m. A mixture density of the second positive active material layer was 3.0 g/cm$^3$.
The second positive electrode had a structure of second positive current collector/second positive active material layer. As shown in FIG. 3, the second positive electrode had a sheet shape significantly bent by roll-pressing.
Because the second positive electrode had a curved sheet shape, it was very difficult to match the position of the second positive electrode with the negative electrode in the stacked assembly. Therefore, because a curling occurred in the second positive electrode during the preparation process of the stacked assembly, it was difficult to manufacture the stacked assembly.
Therefore, a defect occurred during the preparation process of the lithium battery.

**Comparative Example 2: Inner layer wet first positive electrode (double-sided), outermost layer wet second positive electrode (single-sided), thickness of first positive current collector > thickness of second positive current collector, thickness of first positive active material layer > thickness of second positive active material layer**

A lithium battery was prepared in substantially the same manner as in Example 1, except that a second positive electrode prepared by a wet method, instead of a dry method was utilized, and a thickness of the second positive active material layer included in the second positive electrode was changed from 100 $\mu$m to 80 $\mu$m.
For a method of preparing the second positive electrode, refer to Comparative Example 1.
The second positive electrode had a structure of second positive current collector/second positive active material layer. The second positive electrode had a sheet shape significantly bent by roll-pressing.

Because the second positive electrode had a curved sheet shape, it was very difficult to match the position of the second positive electrode with the negative electrode in the stacked assembly. Therefore, because a curling occurred in the second positive electrode during the preparation process of the stacked assembly, it was difficult to manufacture the stacked assembly.

In addition, as the thickness of the second positive current collector and the second positive active material layer decreased, partial cracks occurred in the second positive current collector and the second positive active material layer during the roll-pressing process.

Therefore, a defect occurred during the preparation process of the lithium battery.

**Comparative Example 3: Inner layer wet first positive electrode (double-sided), outermost layer wet second positive electrode (single-sided), thickness of first positive current collector > thickness of second positive current collector, mixture density of first positive active material layer < mixture density of second positive active material layer**

A lithium battery was prepared in substantially the same manner as in Example 1, except that a second positive electrode prepared by a wet method, instead of a dry method was utilized, and a mixture density of the second positive active material layer included in the second positive electrode was changed from 3.0 $g/cm^3$ to 3.9 $g/cm^3$.

For a method of preparing the second positive electrode, refer to Comparative Example 1.

The second positive electrode had a structure of second positive current collector/second positive active material layer. The second positive electrode had a sheet shape significantly bent by roll-pressing.

Because the second positive electrode had a curved sheet shape, it was very difficult to match the position of the second positive electrode with the negative electrode in the stacked assembly. Therefore, because a curling occurred in the second positive electrode during the preparation process of the stacked assembly, it was difficult to manufacture the stacked assembly.

In addition, as the thickness of the second positive current collector decreased, and mixture density of the second positive active material layer increased, partial cracks occurred in the second positive current collector and the second positive active material layer during the roll-pressing process.

Therefore, a defect occurred during the preparation process of the lithium battery.

**Comparative Example 4: Outermost layer dry second positive electrode excluded**

A lithium battery was prepared in substantially the same manner as in Example 1, except that the electrode group stack was prepared utilizing only the first positive electrode and the negative electrode, and applications of the second positive electrodes were excluded when the electrode group stack was prepared.

**Comparative Example 5: Inner layer wet first positive electrode (double-sided), outermost layer dry second positive electrode (single-sided) coating layer free**

A lithium battery was manufactured in substantially the same manner as in Example 1, except that a second positive electrode was manufactured by utilizing an aluminum thin film having a thickness of 12 $\mu$m on which a carbon layer was not coated, as a second positive current collector.

In the prepared second positive electrode, a portion of the second positive active material layer was present in a state in which it was peeled from the second positive current collector.

Therefore, it was impossible to manufacture a pouch cell in which the second positive electrode is arranged on the outermost layer of the electrode group stack.

**Evaluation Example** 1: **Evaluation of vertical force of positive active material layer (I)**

Binding characteristics of the positive active material layers included in the second positive electrodes prepared in Example 1 and Comparative Example 1, respectively, were analyzed by utilizing SAICAS (SAICAS EN-EX, Daipla Wintes, JAPAN).

In order to measure vertical force ($F_V$) according to a depth, a constant velocity analysis was performed under the conditions of a clearance angle of 10°, a rake angle of 20°, a shear angle of 45°, horizontal velocity 4 $\mu$m/s, and vertical velocity of 0.4 $\mu$m/s, by utilizing a diamond blade with a width of 1 mm.

First, a primary constant velocity analysis was performed from a first position on a surface of the positive active material layer to the surface of the positive current collector, and the blade was horizontally moved along the surface of the positive current collector to remove the positive active material layer. Then, at a position 10 $\mu$m backward from the first position, a secondary constant velocity analysis was performed under the same conditions as the primary constant velocity analysis. The data measured in the secondary constant velocity analysis were utilized.

The vertical force of the positive active material layer was measured in the positive active material layer, and the measured data were normalized to the area of the binding force graph, and the vertical relative force ($F_{VR}$) according to a depth of the positive active material layer was derived.

For the vertical force of the positive active material layer, the data utilized were measured from a first point separated 5 % from the surface of the positive active material layer to a second point separated 5 % from the surface of the electrode current collector, with respect to the total thickness of the positive active material layer. For example, data near the surface of the positive active material layer and near the surface of the electrode current collector were excluded to prevent or reduce measurement errors.

From the derived vertical relative force ($F_{VR}$) data of the positive active material layer, a rate of change of vertical relative force ($F_{VR}$) was calculated by utilizing the following Equation 1. In addition, an arithmetic mean value was also calculated from the derived data of vertical relative force ($F_{VR}$) of the positive active material layer.

Rate of change of vertical relative force ($F_{VR}$) = [(Maximum value of vertical relative force - Minimum value of vertical relative force)/ Minimum value of vertical relative force] $\times$ 100

Equation 1

**Table 1**

|  | Rate of change of vertical relative force [%] |
| --- | --- |
| Comparative Example 1 | More than 1,000 |
| Example 1 | Less than 100 |

As shown in Table 1, the rate of change of the vertical relative force of the positive active material layer included in the second positive electrode of Example 1 was 200 % or less.

Therefore, it was confirmed that the positive active material layer had a substantially uniform binding force and distribution of compositions regardless of the position along a thickness direction.

On the other hand, the rate of change of the vertical relative force of the positive active material layer included in the second positive electrode of Comparative Example 1 was greater than 1,000%.

Therefore, it was confirmed that the positive active material layer included in the second positive electrode of Comparative Example 1 had a binding force and composition distribution that were significantly changed according to a position in a thickness direction.

**Evaluation Example 2: Evaluation of horizontal force of positive active material layer (II)**

Binding characteristics of the positive active material layers included in the second positive electrodes prepared in Example 1 and Comparative Example 1, respectively, were analyzed by utilizing SAICAS (SAICAS EN-EX, Daipla Wintes, JAPAN).

In order to measure horizontal force ($F_H$) according to a depth, a constant velocity analysis was performed under the conditions of a clearance angle of 10°, a rake angle of 20°, a shear angle of 45°, horizontal velocity of 4 $\mu$m/s, and vertical velocity of 0.4 $\mu$m/s, by utilizing a diamond blade with a width of 1 mm.

First, a primary constant velocity analysis was performed from a first position on a surface of the positive active material layer to the surface of the positive current collector, and the blade was horizontally moved along the surface of the positive current collector to remove the positive active material layer. Subsequently, at a position 10 $\mu$m backward from the first position, a secondary constant velocity analysis was performed under the same conditions as the primary constant velocity analysis. The data measured in the secondary constant velocity analysis were utilized.

A first horizontal force ($F_{H1}$) at a first point separated 10 % from the surface of the positive active material layer, and a second horizontal force ($F_{H2}$) at a second point separated 10 % from the surface of the electrode current collector, with respect to the total thickness of the positive active material layer, were measured.

A ratio of the horizontal forces at the first point and the second point is defined by Equation 2.

## Equation 2

Ratio of horizontal binding forces at the first point and the second point (%) = [$F_{H2}/F_{H1}$]×100

Table 2

| | Ratio of horizontal relative forces [%] |
|---|---|
| Comparative Example 1 | Less than 50 |
| Example 1 | 70 or more |

As shown in Table 2, the ratio of the horizontal forces of the positive active material layer included in the second positive electrode of Example 1 was 70 % or more.

On the other hand, the ratio of the horizontal forces of the positive active material layer included in the second positive electrode of Comparative Example 1 was less than 50%.

That is, the ratio of the horizontal relative forces of the positive active material layer included in the second positive electrode of Example 1 was increased compared to that of the positive active material layer of Comparative Example 1.

Therefore, it was confirmed that the positive active material layer included in the second positive electrode of Example 1 had more substantially uniform binding force and composition distribution than the positive active material layer included in the second positive electrode of Comparative Example 1.

**Evaluation Example 3: Evaluation of surface roughness of second positive current collector**

Cross-sections of the second positive electrodes prepared in Example 1 and Comparative Example 1 were observed by utilizing a scanning electron microscope, and roughness of the surfaces of the second positive current collectors were measured from the cross-sectional images by utilizing software.

Some of the measurement results are shown in Table 3.

**Table 3**

| | $R_q$ [$\mu$m] | $R_a$ [$\mu$m] | $R_{max}$ [$\mu$m] |
|---|---|---|---|
| Comparative Example 1 | More than 2.3 | More than 2.3 | More than 3.5 |
| Example 1 | Less than 1 | Less than 1 | Less than 1 |

As shown in Table 3, the surface of the second positive current collector included in the wet second positive electrode prepared in Comparative Example 1 showed $R_{max}$ of more than 3.5 $\mu$m, $R_a$ of more than 2.3 $\mu$m, and $R_q$ of more than 2.3 $\mu$m.

From the scanning electron microscope image of the cross section of the wet second positive electrode of Comparative Example 1, it was confirmed that irregularities were formed on the surface of the second positive current collector because positive active material particles penetrated into the second positive current collector, due to an increased press pressure.

As shown in Table 3, the surface of the second positive current collector included in the dry second positive electrode prepared in Example 1 exhibited reduced surface roughness.

From the scanning electron microscope image of the cross section of the dry second positive electrode of Example 1, it was confirmed that almost no irregularity was formed on the surface of the second positive current collector because positive active material particles did not penetrate into the second positive current collector, due to a reduced press pressure.

In the dry second positive electrode of Example 1, although a thin film current collector was utilized, cracks in the thin film current collector were not found.

**Evaluation Example 4: Evaluation of peel strength**

For each of the second positive electrodes prepared in Example 1, Comparative Example 1 and Comparative Example 5, the positive electrode was cut to 25 mm × 150 mm and fixed to the center of a 30 mm × 200 mm slide glass by utilizing a tape, and then while peeling the second positive current collector from the second positive active material layer by utilizing a universal test machine (UTM), 90 degree peel strength was measured. Some of the measurement results are shown in Table 4.

**Table 4**

|  | Peel strength [gf/mm] |
|---|---|
| Comparative Example 1 | 3 |
| Example 1 | 1 |

As shown in Table 4, the second positive electrode of Example 1 showed a binding force of 1 gf/mm. Therefore, the second positive electrode of Example 1 showed an enhanced binding force despite the low surface roughness of the positive current collector, as shown in Evaluation Example 3 above.

The second positive electrode of Comparative Example 1 also showed an excellent or suitable binding force, but as shown in Evaluation Example 3, such a binding force was due to the high surface roughness of the surface of the positive current collector.

In the second positive electrode of Comparative Example 5, because a portion of the positive active material layer was peeled off from the second positive current collector before the peel strength evaluation, the peel strength evaluation was impossible.


**Evaluation Example 5: Evaluation of lithium deposition**

Lithium batteries prepared in Example 1, Example 2, and Comparative Example 4 were charged at 25 °C at a constant current of 0.1 C rate until the voltage reached 4.4 V (vs. Li), and then, maintaining 4.4 V in a constant voltage mode, the batteries were cut-off at a current of 0.05 C rate. Subsequently, the batteries were discharged at a constant current of 0.1 C rate until the voltage reached 2.8 V (formation cycle).

The lithium batteries that had undergone the formation cycle were charged at 25 °C at a constant current of 0.5 C rate until the voltage reached 4.4 V (vs. Li). Subsequently, the batteries were discharged at a constant current of 0.5 C rate until the voltage reached 2.8 V (vs. Li), and this cycle was repeated under the same conditions to the 100th cycle (repeated 100 times). There was a 10 minute-rest period after one charge/discharge cycle in all the charge/discharge cycles.

After the charging and discharging were completed, the battery was disassembled to evaluate whether lithium (Li) was deposited on the surface of the negative electrode. The experimental results are shown in Table 5.

**Table 5**

|  | Identification of lithium deposition |
|---|---|
| Example 1 | Not deposited |
| Example 2 | Not deposited |
| Comparative Example 4 | Deposited |

As shown in Table 5, in the lithium batteries of Example 1 and Example 2, in which the second positive electrode was arranged on the outermost layer of the electrode group stack, there was no lithium deposition on the surface of the negative electrode.

On the other hand, in the lithium battery of Comparative Example 4 which did not include the second positive electrode of the outermost layer, lithium deposition on the surface of the negative electrode was confirmed.

According to aspects of embodiments of the present disclosure, because generation of defects is suppressed or reduced during the manufacturing process of the electrode group stack, defects of a lithium battery including the same are suppressed or reduced.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

In the present disclosure, when particles are spherical, "diameter" indicates a particle diameter or an average particle diameter, and when the particles are nonspherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

**Claims**

1. A lithium battery (10000) comprising:

an electrode group stack (1000) comprising a plurality of positive electrodes (400, 401) and one or more negative electrodes (700) that are alternately stacked in a thickness direction of the electrode group stack (1000), the plurality of positive electrodes (400, 401) comprising a first positive electrode (400) and a second positive electrode (401), the first positive electrode (400) being an inner layer of the electrode group stack (1000), the second positive electrode (401) being an outermost layer of the electrode group stack (1000), and the first positive electrode (400) comprising a first positive current collector (200) and a first positive active material layer (100), the first positive current collector (200) comprising a first surface and a second surface facing oppositely away from the first surface of the first positive current collector (200), the first positive active material layer (100) being on the first and second surfaces of the first positive current collector (200), the second positive electrode (401) comprising a second positive current collector (201), a second positive active material layer (101), and an interlayer (301) between the second positive current collector (201) and the second positive active material layer (101), the second positive current collector (201) comprising a first surface facing the inner layer and a second surface facing oppositely away from the first surface of the second positive current collector (201), wherein the second positive active material layer (101) is on the first surface of the second positive current collector (201), and not on the second surface of the second positive current collector (201), and a thickness of the second positive current collector (201) is less than or equal to a thickness of the first positive current collector (200), **characterized in that**

the second positive active material layer (101) comprises a second positive active material and a binder, the second positive active material is a dry positive active material,

the binder is a dry binder and the dry binder comprises a fibrillized binder, and the dry binder comprises a fluorine-based binder,

a thickness of the second positive active material layer (101) arranged on the second positive current collector (201) is greater than the thickness of the first positive active material layer (100) arranged on the first positive current collector (200) and

a ratio of the thickness of the first positive active material layer (100) to the thickness of the second positive active material layer (101) is 1: 1.1 to 1: 3.

2. The lithium battery of claim 1, wherein a ratio of a thickness of the first positive current collector (200) to a thickness of the second positive current collector (201) is 1: 0.2 to 1: 1.

3. The lithium battery (10000) of claim 1 or 2, wherein a maximum roughness depth ($R_{max}$) of a surface of the first and second surfaces of the first positive current collector (200) is greater than a maximum roughness of a surface of the first and second surfaces of the second positive current collector (201), a mean roughness ($R_a$) of the surface of the first positive current collector (200) is greater than a mean roughness of the surface of the second positive current collector (201), or a root mean square (RMS) roughness ($R_q$) of the surface of the first positive current collector (200) is greater than a root mean square roughness of the surface of the second positive current collector (201).

4. The lithium battery (10000) of any of the preceding claims, wherein the maximum roughness depth ($R_{max}$) of a surface of the first and second surfaces of the second positive current collector (201) is 3 $\mu$m or less, a mean roughness ($R_a$) of the surface of the second positive current collector (201) is less than 2 $\mu$m, or a root mean square roughness ($R_q$) of the surface of the second positive current collector (201) is 2 $\mu$m or less.

5. The lithium battery (10000) of any of the preceding claims, wherein the interlayer (301) comprises a binder, the binder comprises at least one of a conductive binder or a non-conductive binder, and the binder comprises a fluorine-based binder, and/or

the interlayer (301) comprises a carbon-based conductive material.

6. The lithium battery (10000) of claim 5, wherein the carbon-based conductive material comprises a fibrous conductive material, and the fibrous conductive material comprises carbon nanotubes, carbon fibers, or a mixture thereof.

7. The lithium battery (10000) of any of the preceding claims, wherein a thickness of the interlayer (301) is 0.01 % to 30 % of the thickness of the second positive current collector (201).

8. The lithium battery (10000) of any of the preceding claims, wherein the second positive active material layer (101) further comprises a conductive material, the conductive material is a dry conductive material, and the dry conductive material comprises a carbon-based conductive material.

9. The lithium battery (10000) of claim 1, wherein the second positive active material layer (101) is a self-standing film, and the second positive active material layer (101) is free of a residual processing solvent.

10. The lithium battery (10000) of any of the preceding claims, wherein

a mixture density of the second positive active material layer (101) is less than or equal to a mixture density of the first positive active material layer (100), and

a ratio of the mixture density of the first positive active material layer (100) to the mixture density of the second positive active material layer (101) is 1: 0.5 to 1: 1.

11. The lithium battery (10000) of claim 1, wherein, in the second positive active material layer (101), a rate of change of vertical relative force ($F_{VR}$) according to a depth measured by a surface and interfacial cutting analysis system (SAICAS), from a first point to a second point is 300 % or less, wherein the first point is separated 5 % from a surface of the second positive active material layer (101) in a direction toward the second positive current collector (201), and the second point is separated 5 % from the first surface of the second positive current collector (201), with respect to a total thickness of the second positive active material layer (101); and/or

the second positive active material layer (101), a ratio of a second horizontal force ($F_{H2}$) at a second point to a first horizontal force (F$_{H1}$) at a first point, measured by a surface and interfacial cutting analysis system (SAICAS), is 50 % or more, wherein the first point is separated 10 % from a surface of the second positive active material layer (101), in a direction toward the second positive current collector (201), and the second point is separated 10 % from the first surface of the second positive current collector (201) in a direction toward the second positive active material layer (101), with respect to a total depth from the surface of the second positive active material layer (101) to the first surface of the second positive current collector (201).

12. The lithium battery (10000) of any of the preceding claims, further comprising an electrolyte between at least one of the plurality of positive electrodes (400, 401) and at least one of the one or more negative electrodes (700), wherein the electrolyte is a liquid electrolyte or a solid electrolyte.

13. A method of preparing a lithium battery (10000) according to claim 1, the method comprising:

preparing a dry mixture by dry mixing a second positive active material (101), a dry conductive material, and a dry binder;
providing a second positive current collector (201);
arranging an interlayer (301) on a first surface of the second positive current collector (201); and
preparing a second positive electrode (401) having a second positive active material layer (101) on the first surface of the second positive current collector (201) by placing and roll-pressing the dry mixture on the interlayer (301),
preparing an electrode group stack (1000) comprising a plurality of positive electrodes (400, 401) and one or more negative electrodes (700) that are alternately stacked in a thickness direction,
the plurality of positive electrodes (400, 401) comprising a first positive electrode (400) and the second positive electrode (401), the first positive electrode (400) being an inner layer of the electrode group stack (1000), the second positive electrode (401) being an outermost layer of the electrode group stack (1000), and the first positive electrode (400) comprising a first positive current collector (100) and a first positive active material layer (200), the first positive current collector (200) comprising a first surface and a second surface facing oppositely away from the first surface of the first positive current collector (200),
the first positive active material layer (100) being on the first and second surfaces of the first positive current collector (200),
the second positive electrode (401) comprising the second positive current collector (201), the second positive active material layer (101), and the interlayer (301) between the second positive current collector (201) and the second positive active material layer (101), the second positive current collector (201) comprising a first surface facing the inner layer and a second surface facing oppositely away from the first surface of the second positive current collector (201),
wherein the second positive active material layer (101) is on the first surface of the second positive current collector (201), and not on the second surface of the second positive current collector (201), and a thickness of the second positive current collector (201) is less than or equal to a thickness of the first positive current collector (200), **characterized in that**
a first dry mixture is prepared by primarily dry mixing a second positive active material, a dry conductive material, and a dry binder and
a second mixture is prepared by secondarily dry mixing the electrode active material, the dry conductive material, and the dry binder.

14. The method of claim 13, wherein the primary dry mixing is performed at a temperature of 25 °C to 65 °C, at a rotation speed of 2,000 rpm or less, for 15 minutes or less.

15. The method of claim 13, wherein the secondary dry mixing is performed at a temperature of 25 °C to 65 °C, at a rotation speed of 4,000 rpm or more, for 10 minutes or more.

**Patentansprüche**

1. Lithiumbatterie (10000), umfassend:

einen Elektrodengruppenstapel (1000) mit mehreren positiven Elektroden (400, 401) und einer oder mehreren negativen Elektroden (700), die abwechselnd in einer Dickenrichtung des Elektrodengruppenstapels (1000) gestapelt sind,

wobei die mehreren positiven Elektroden (400, 401) eine erste positive Elektrode (400) und eine zweite positive Elektrode (401) umfassen, wobei die erste positive Elektrode (400) eine innere Schicht des Elektrodengruppenstapels (1000) und die zweite positive Elektrode (401) eine äußerste Schicht des Elektrodengruppenstapels (1000) ist, und wobei die erste positive Elektrode (400) einen ersten positiven Stromkollektor (200) und eine erste positive aktive Materialschicht (100) umfasst,

wobei der erste positive Stromkollektor (200) eine erste Oberfläche und eine zweite Oberfläche umfasst, die von der ersten Oberfläche des ersten positiven Stromkollektors (200) abgewandt ist,

wobei sich die erste positive aktive Materialschicht (100) auf der ersten und der zweiten Oberfläche des ersten positiven Stromkollektors (200) befindet,

wobei die zweite positive Elektrode (401) einen zweiten positiven Stromkollektor (201), eine zweite positive aktive Materialschicht (101) und eine Zwischenschicht (301) zwischen dem zweiten positiven Stromkollektor (201) und der zweiten positiven aktiven Materialschicht (101) umfasst, wobei der zweite positive Stromkollektor (201) eine erste Oberfläche, die der inneren Schicht zugewandt ist, und eine zweite Oberfläche, die von der ersten Oberfläche des zweiten positiven Stromkollektors (201) abgewandt ist, umfasst,

wobei sich die zweite positive aktive Materialschicht (101) auf der ersten Oberfläche des zweiten positiven Stromkollektors (201) und nicht auf der zweiten Oberfläche des zweiten positiven Stromkollektors (201) befindet und eine Dicke des zweiten positiven Stromkollektors (201) kleiner oder gleich einer Dicke des ersten positiven Stromkollektors (200) ist, **dadurch gekennzeichnet, dass**

die zweite positive aktive Materialschicht (101) ein zweites positives aktives Material und ein Bindemittel umfasst, wobei das zweite positive aktive Material ein trockenes positives aktives Material ist,

wobei das Bindemittel ein trockenes Bindemittel ist, wobei das trockene Bindemittel ein fibrilliertes Bindemittel umfasst, und wobei das trockene Bindemittel ein Bindemittel auf Fluorbasis umfasst,

wobei eine Dicke der zweiten positiven aktiven Materialschicht (101), die auf dem zweiten positiven Stromkollektor (201) angeordnet ist, größer ist als die Dicke der ersten positiven aktiven Materialschicht (100), die auf dem ersten positiven Stromkollektor (200) angeordnet ist, und

wobei ein Verhältnis der Dicke der ersten positiven aktiven Materialschicht (100) zur Dicke der zweiten positiven aktiven Materialschicht (101) 1: 1,1 bis 1: 3 beträgt.

2. Lithiumbatterie nach Anspruch 1, wobei ein Verhältnis einer Dicke des ersten positiven Stromkollektors (200) zu einer Dicke des zweiten positiven Stromkollektors (201) 1: 0,2 bis 1: 1 beträgt.

3. Lithiumbatterie (10000) nach Anspruch 1 oder 2, wobei eine maximale Rauhtiefe ($R_{max}$) einer Oberfläche von der ersten und der zweiten Oberfläche des ersten positiven Stromkollektors (200) größer ist als eine maximale Rauheit einer Oberfläche von der ersten und der zweiten Oberfläche des zweiten positiven Stromkollektors (201), wobei eine mittlere Rauheit ($R_a$) der Oberfläche des ersten positiven Stromkollektors (200) größer als eine mittlere Rauheit der Oberfläche des zweiten positiven Stromkollektors (201) oder eine quadratische mittlere Rauheit (kurz: RMS-Rauheit) ($R_q$) der Oberfläche des ersten positiven Stromkollektors (200) größer als eine quadratische mittlere Rauheit der Oberfläche des zweiten positiven Stromkollektors (201) ist.

4. Lithiumbatterie (10000) nach einem der vorstehenden Ansprüche, wobei die maximale Rauhtiefe ($R_{max}$) einer Oberfläche von der ersten und der zweiten Oberfläche des zweiten positiven Stromkollektors (201) 3 pm oder weniger beträgt, eine mittlere Rauheit ($R_a$) der Oberfläche des zweiten positiven Stromkollektors (201) weniger als 2 pm beträgt oder eine quadratische mittlere Rauheit ($R_q$) der Oberfläche des zweiten positiven Stromkollektors (201) 2 pm oder weniger beträgt.

5. Lithiumbatterie (10000) nach einem der vorstehenden Ansprüche, wobei die Zwischenschicht (301) ein Bindemittel umfasst, das mindestens eines von einem leitfähigen Bindemittel oder einem nichtleitfähigen Bindemittel umfasst, wobei das Bindemittel ein Bindemittel auf Fluorbasis umfasst, und/oder wobei die Zwischenschicht (301) ein leitfähiges Material auf Kohlenstoffbasis umfasst.

6. Lithiumbatterie (10000) nach Anspruch 5, wobei das leitfähige Material auf Kohlenstoffbasis ein faserförmiges leitfähiges Material umfasst, wobei das faserförmige leitfähige Material Kohlenstoffnanoröhren, Kohlenstofffasern oder eine Mischung davon umfasst.

7. Lithiumbatterie (10000) nach einem der vorstehenden Ansprüche, wobei eine Dicke der Zwischenschicht (301) 0,01% bis 30% der Dicke des zweiten positiven Stromkollektors (201) beträgt.

8. Lithiumbatterie (10000) nach einem der vorstehenden Ansprüche, wobei die zweite positive aktive Materialschicht (101) ferner ein leitfähiges Material umfasst, das ein trockenes leitfähiges Material ist, wobei das trockene leitfähige Material ein leitfähiges Material auf Kohlenstoffbasis umfasst.

9. Lithiumbatterie (10000) nach Anspruch 1, wobei die zweite positive aktive Materialschicht (101) eine selbsttragende Folie ist, und wobei die zweite positive aktive Materialschicht (101) frei von einem Restverarbeitungslösungsmittel ist.

10. Lithiumbatterie (10000) nach einem der vorstehenden Ansprüche, wobei

eine Mischungsdichte der zweiten positiven aktiven Materialschicht (101) kleiner oder gleich einer Mischungsdichte der ersten positiven aktiven Materialschicht (100) ist und
ein Verhältnis der Mischungsdichte der ersten positiven aktiven Materialschicht (100) zur Mischungsdichte der zweiten positiven aktiven Materialschicht (101) 1: 0,5 bis 1: 1 beträgt.

11. Lithiumbatterie (10000) nach Anspruch 1, wobei in der zweiten positiven aktiven Materialschicht (101) eine Änderungsrate der vertikalen Relativkraft ($F_{VR}$) gemäß einer Tiefe, gemessen durch ein Oberflächen- und Grenzflächen-Schneideanalyse-System (kurz: SAIGAS), von einem ersten Punkt zu einem zweiten Punkt 300% oder weniger beträgt, wobei der erste Punkt um 5% von einer Oberfläche der zweiten positiven aktiven Materialschicht (101) in Richtung des zweiten positiven Stromkollektors (201) und der zweite Punkt um 5% von der ersten Oberfläche des zweiten positiven Stromkollektors (201) getrennt ist, bezogen auf eine Gesamtdicke der zweiten positiven aktiven Materialschicht (101); und/oder
wobei die zweite positive aktive Materialschicht (101), ein Verhältnis einer zweiten horizontalen Kraft ($F_{H2}$) an einem zweiten Punkt zu einer ersten horizontalen Kraft ($F_{H1}$) an einem ersten Punkt, gemessen durch ein Oberflächen- und Grenzflächen-Schneideanalyse-System (kurz: SAIGAS), 50% oder mehr beträgt, wobei der erste Punkt um 10% von einer Oberfläche der zweiten positiven aktiven Materialschicht (101) in Richtung des zweiten positiven Stromkollektors (201) und der zweite Punkt ist um 10% von der ersten Oberfläche des zweiten positiven Stromkollektors (201) in Richtung der zweiten positiven aktiven Materialschicht (101) getrennt ist, bezogen auf eine Gesamttiefe von der Oberfläche der zweiten positiven aktiven Materialschicht (101) bis zur ersten Oberfläche des zweiten positiven Stromkollektors (201).

12. Lithiumbatterie (10000) nach einem der vorstehenden Ansprüche, umfassend ferner einen Elektrolyten zwischen mindestens einer der mehreren positiven Elektroden (400, 401) und mindestens einer der einen oder der mehreren negativen Elektroden (700), wobei der Elektrolyt ein flüssiger Elektrolyt oder ein fester Elektrolyt ist.

13. Verfahren zur Herstellung einer Lithiumbatterie (10000) nach Anspruch 1, wobei das Verfahren Folgendes umfasst:

Herstellen einer Trockenmischung durch Trockenmischen eines zweiten positiven aktiven Materials (101), eines trockenen leitfähigen Materials und eines trockenen Bindemittels;
Bereitstellen eines zweiten positiven Stromkollektors (201);
Anordnen einer Zwischenschicht (301) auf einer ersten Oberfläche des zweiten positiven Stromkollektors (201); und
Herstellen einer zweiten positiven Elektrode (401) mit einer zweiten positiven aktiven Materialschicht (101) auf der ersten Oberfläche des zweiten positiven Stromkollektors (201) durch Aufbringen und Walzenpressen der Trockenmischung auf die Zwischenschicht (301),
Herstellen eines Elektrodengruppenstapels (1000), der mehrere positive Elektroden (400, 401) und eine oder mehrere negative Elektroden (700) umfasst, die abwechselnd in einer Dickenrichtung gestapelt sind,
wobei die mehreren positiven Elektroden (400, 401) eine erste positive Elektrode (400) und die zweite positive Elektrode (401) umfassen, wobei die erste positive Elektrode (400) eine innere Schicht des Elektrodengruppenstapels (1000) und die zweite positive Elektrode (401) eine äußerste Schicht des Elektrodengruppenstapels (1000) ist, und wobei die erste positive Elektrode (400) einen ersten positiven Stromkollektor (100) und eine erste positive aktive Materialschicht (200) umfasst,
wobei der erste positive Stromkollektor (200) eine erste Oberfläche und eine zweite Oberfläche umfasst, die von der ersten Oberfläche des ersten positiven Stromkollektors (200) abgewandt ist,
wobei sich die erste positive aktive Materialschicht (100) auf der ersten und der zweiten Oberfläche des ersten positiven Stromkollektors (200) befindet,
wobei die zweite positive Elektrode (401) den zweiten positiven Stromkollektor (201), die zweite positive aktive Materialschicht (101) und die Zwischenschicht (301) zwischen dem zweiten positiven Stromkollektor (201) und der zweiten positiven aktiven Materialschicht (101) umfasst, wobei der zweite positive Stromkollektor (201) eine erste Oberfläche, die der inneren Schicht zugewandt ist, und eine zweite Oberfläche, die von der ersten Oberfläche des zweiten positiven Stromkollektors (201) abgewandt ist, umfasst, wobei sich die zweite positive aktive Materialschicht (101) auf der ersten Oberfläche des zweiten positiven Stromkollektors (201) und nicht auf der zweiten Oberfläche des zweiten positiven Stromkollektors (201) befindet, und wobei eine Dicke des zweiten positiven Stromkollektors (201) kleiner oder gleich einer Dicke des ersten positiven Stromkollektors (200) ist, **dadurch gekennzeichnet, dass**

eine erste Trockenmischung durch primäres Trockenmischen eines zweiten positiven aktiven Materials, eines trockenen leitfähigen Materials und eines trockenen Bindemittels und

eine zweite Mischung durch sekundäres Trockenmischen des aktiven Elektrodenmaterials, des trockenen leitfähigen Materials und des trockenen Bindemittels hergestellt wird.

14. Verfahren nach Anspruch 13, wobei das primäre Trockenmischen bei einer Temperatur von 25°C bis 65°C mit einer Drehzahl von 2.000 U/min oder weniger für 15 Minuten oder weniger durchgeführt wird.

15. Verfahren nach Anspruch 13, wobei das sekundäre Trockenmischen bei einer Temperatur von 25°C bis 65°C mit einer Drehzahl von 4.000 U/min oder mehr für 10 Minuten oder länger durchgeführt wird.


**Revendications**

1. Batterie au lithium (10000) comportant :

   un empilement de groupes d'électrodes (1000) comportant une pluralité d'électrodes positives (400, 401) et une ou plusieurs électrodes négatives (700) qui sont empilées alternativement dans une direction d'épaisseur de l'empilement de groupes d'électrodes (1000),
   la pluralité d'électrodes positives (400, 401) comportant une première électrode positive (400) et une seconde électrode positive (401), la première électrode positive (400) étant une couche interne de l'empilement de groupes d'électrodes (1000), la seconde électrode positive (401) étant une couche la plus externe de l'empilement de groupes d'électrodes (1000), et la première électrode positive (400) comportant un premier collecteur de courant positif (200) et une première couche de matériau actif positif (100),
   le premier collecteur de courant positif (200) comportant une première surface et une seconde surface opposée à la première surface du premier collecteur de courant positif (200),
   la première couche de matériau actif positif (100) se trouvant sur les première et seconde surfaces du premier collecteur de courant positif (200),
   la seconde électrode positive (401) comportant un second collecteur de courant positif (201), une seconde couche de matériau actif positif (101), et une couche intermédiaire (301) entre le second collecteur de courant positif (201) et la seconde couche de matériau actif positif (101), le second collecteur de courant positif (201) comportant une première surface faisant face à la couche interne et une seconde surface faisant face à l'opposé de la première surface du second collecteur de courant positif (201),
   dans laquelle la seconde couche de matériau actif positif (101) se trouve sur la première surface du second collecteur de courant positif (201), et non sur la seconde surface du second collecteur de courant positif (201), et une épaisseur du second collecteur de courant positif (201) est inférieure ou égale à une épaisseur du premier collecteur de courant positif (200), **caractérisée en ce que**
   la seconde couche de matériau actif positif (101) comporte un second matériau actif positif et un liant, le second matériau actif positif est un matériau actif positif sec,
   le liant est un liant sec et le liant sec comporte un liant fibrillé, et le liant sec comporte un liant à base de fluor,
   une épaisseur de la seconde couche de matériau actif positif (101) agencée sur le second collecteur de courant positif (201) est supérieure à l'épaisseur de la première couche de matériau actif positif (100) agencée sur le premier collecteur de courant positif (200) et
   un rapport de l'épaisseur de la première couche de matériau actif positif (100) à l'épaisseur de la seconde couche de matériau actif positif (101) est de 1: 1,1 à 1: 3.

2. Batterie au lithium selon la revendication 1, dans laquelle un rapport d'une épaisseur du premier collecteur de courant positif (200) à une épaisseur du second collecteur de courant positif (201) est de 1: 0,2 à 1: 1.

3. Batterie au lithium (10000) selon la revendication 1 ou 2, dans laquelle une profondeur de rugosité maximale ($R_{max}$) d'une surface parmi les première et seconde surfaces du premier collecteur de courant positif (200) est supérieure à une rugosité maximale d'une surface parmi les première et seconde surfaces du second collecteur de courant positif (201), une rugosité moyenne ($R_a$) de la surface du premier collecteur de courant positif (200) est supérieure à une rugosité moyenne de la surface du second collecteur de courant positif (201), ou une rugosité moyenne quadratique (RMS) (Rq) de la surface du premier collecteur de courant positif (200) est supérieure à une rugosité moyenne quadratique de la surface du second collecteur de courant positif (201).

4. Batterie au lithium (10000) selon l'une quelconque des revendications précédentes, dans laquelle la profondeur de rugosité maximale ($R_{max}$) d'une surface parmi les première et seconde surfaces du second collecteur de courant positif (201) est de 3 $\mu$m ou moins, une rugosité moyenne ($R_a$) de la surface du second collecteur de courant positif (201) est inférieure à 2 $\mu$m, ou une rugosité moyenne quadratique (Rq) de la surface du second collecteur de courant positif (201) est de 2 $\mu$m ou moins.

5. Batterie au lithium (10000) selon l'une quelconque des revendications précédentes, dans laquelle la couche intermédiaire (301) comporte un liant, le liant comporte au moins l'un parmi un liant conducteur ou un liant non conducteur, et le liant comporte un liant à base de fluor, et/ou
la couche intermédiaire (301) comporte un matériau conducteur à base de carbone.

6. Batterie au lithium (10000) selon la revendication 5, dans laquelle le matériau conducteur à base de carbone comporte un matériau conducteur fibreux, et le matériau conducteur fibreux comporte des nanotubes de carbone, des fibres de carbone, ou un mélange de ceux-ci.

7. Batterie au lithium (10000) selon l'une quelconque des revendications précédentes, dans laquelle une épaisseur de la couche intermédiaire (301) est de 0,01 % à 30 % de l'épaisseur du second collecteur de courant positif (201).

8. Batterie au lithium (10000) selon l'une quelconque des revendications précédentes, dans laquelle la seconde couche de matériau actif positif (101) comporte en outre un matériau conducteur, le matériau conducteur est un matériau conducteur sec, et le matériau conducteur sec comporte un matériau conducteur à base de carbone.

9. Batterie au lithium (10000) selon la revendication 1, dans laquelle la seconde couche de matériau actif positif (101) est un film autoportant, et la seconde couche de matériau actif positif (101) est exempte d'un solvant de traitement résiduel.

10. Batterie au lithium (10000) selon l'une quelconque des revendications précédentes, dans laquelle

une densité de mélange de la seconde couche de matériau actif positif (101) est inférieure ou égale à une densité de mélange de la première couche de matériau actif positif (100), et
un rapport de la densité de mélange de la première couche de matériau actif positif (100) à la densité de mélange de la seconde couche de matériau actif positif (101) est de 1: 0,5 à 1: 1.

11. Batterie au lithium (10000) selon la revendication 1, dans laquelle, dans la seconde couche de matériau actif positif (101), un taux de changement de force relative verticale ($F_{VR}$) selon une profondeur mesurée par un système d'analyse de coupe superficielle et interfaciale (SAICAS), d'un premier point à un second point est de 300 % ou moins, dans laquelle le premier point est séparé de 5 % d'une surface de la seconde couche de matériau actif positif (101) dans une direction vers le second collecteur de courant positif (201), et le second point est séparé de 5 % de la première surface du second collecteur de courant positif (201), par rapport à une épaisseur totale de la seconde couche de matériau actif positif (101) ; et/ou
dans la seconde couche de matériau actif positif (101), un rapport d'une seconde force horizontale ($F_{H2}$) au niveau d'un second point à une première force horizontale ($F_{H1}$) au niveau d'un premier point, mesurée par un système d'analyse de coupe superficielle et interfaciale (SAICAS), est de 50 % ou plus, le premier point étant séparé de 10 % d'une surface de la seconde couche de matériau actif positif (101), dans une direction vers le second collecteur de courant positif (201), et le second point étant séparé de 10 % de la première surface du second collecteur de courant positif (201) dans une direction vers la seconde couche de matériau actif positif (101), par rapport à une profondeur totale de la surface de la seconde couche de matériau actif positif (101) à la première surface du second collecteur de courant positif (201) .

12. Batterie au lithium (10000) selon l'une quelconque des revendications précédentes, comportant en outre un électrolyte entre au moins l'une de la pluralité d'électrodes positives (400, 401) et au moins l'une des une ou plusieurs électrodes négatives (700), dans laquelle l'électrolyte est un électrolyte liquide ou un électrolyte solide.

13. Procédé de préparation d'une batterie au lithium (10000) selon la revendication 1, le procédé comportant :

la préparation d'un mélange sec en mélangeant à sec un second matériau actif positif (101), un matériau conducteur sec et un liant sec ;

la fourniture d'un second collecteur de courant positif (201) ;

l'agencement d'une couche intermédiaire (301) sur une première surface du second collecteur de courant positif (201) ; et

la préparation d'une seconde électrode positive (401) ayant une seconde couche de matériau actif positif (101) sur la première surface du second collecteur de courant positif (201) en plaçant et en pressant au rouleau le mélange sec sur la couche intermédiaire (301),

la préparation d'un empilement de groupes d'électrodes (1000) comportant une pluralité d'électrodes positives (400, 401) et une ou plusieurs électrodes négatives (700) qui sont empilées alternativement dans une direction d'épaisseur,

la pluralité d'électrodes positives (400, 401) comportant une première électrode positive (400) et la seconde électrode positive (401), la première électrode positive (400) étant une couche interne de l'empilement de groupes d'électrodes (1000), la seconde électrode positive (401) étant une couche la plus externe de l'empilement de groupes d'électrodes (1000), et la première électrode positive (400) comportant un premier collecteur de courant positif (100) et une première couche de matériau actif positif (200),

le premier collecteur de courant positif (200) comportant une première surface et une seconde surface opposée à la première surface du premier collecteur de courant positif (200),

la première couche de matériau actif positif (100) se trouvant sur les première et seconde surfaces du premier collecteur de courant positif (200),

la seconde électrode positive (401) comportant le second collecteur de courant positif (201), la seconde couche de matériau actif positif (101), et la couche intermédiaire (301) entre le second collecteur de courant positif (201) et la seconde couche de matériau actif positif (101), le second collecteur de courant positif (201) comportant une première surface faisant face à la couche interne et une seconde surface faisant face à l'opposé de la première surface du second collecteur de courant positif (201),

dans lequel la seconde couche de matériau actif positif (101) se trouve sur la première surface du second collecteur de courant positif (201), et non sur la seconde surface du second collecteur de courant positif (201), et une épaisseur du second collecteur de courant positif (201) est inférieure ou égale à une épaisseur du premier collecteur de courant positif (200), **caractérisé en ce que**

un premier mélange sec est préparé par un mélange à sec primaire d'un second matériau actif positif, d'un matériau conducteur sec et d'un liant sec et

un second mélange sec est préparé par un mélange à sec secondaire du matériau actif positif d'électrode, du matériau conducteur sec et du liant sec.

**14.** Procédé selon la revendication 13, dans lequel le mélange sec primaire est effectué à une température de 25 °C à 65 °C, à une vitesse de rotation de 2 000 tr/min ou moins, pendant 15 minutes ou moins.

**15.** Procédé selon la revendication 13, dans lequel le mélange sec secondaire est effectué à une température de 25 °C à 65 °C, à une vitesse de rotation de 4 000 tr/min ou plus, pendant 10 minutes ou plus.

# FIG. 1

## FIG. 2

## FIG. 3

# FIG. 4

1

4
2
4
3

7

8

5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022209220 A1

- EP 3754773 A1